(19) Europäisches Patentamt / European Patent Office / Office européen des brevets

(11) **EP 3 296 767 A1**

(12) **EUROPEAN PATENT APPLICATION**

(43) Date of publication:
**21.03.2018 Bulletin 2018/12**

(51) Int Cl.:
*G01S 19/42* (2010.01)  *G01S 19/24* (2010.01)

(21) Application number: **16188946.4**

(22) Date of filing: **15.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ETH Zurich**
**8092 Zurich (CH)**

(72) Inventors:
• **BISSIG, Pascal**
  **8032 Zürich (CH)**
• **EICHELBERGER, Manuel**
  **3270 Aarberg (CH)**

(54) **DEVICE, SYSTEM AND METHOD FOR DETERMINING AN ESTIMATE RELATING TO A PARAMETER OF A WIRELESS RECEIVER DEVICE**

(57)   Disclosed embodiments relate to a method for determining an estimate of a value relating to a parameter of a wireless receiver device, comprising: (1) obtaining first data relating to the wireless receiver device and/or the state of the positioning system; (2) establishing, based on the first data, a plurality of hypotheses regarding at least one device parameter value of the wireless receiver device; (3) obtaining second data descriptive of at least two EM signals actually received by the wireless receiver device from a set of at least two transmitters, respectively; (4) determining at least two levels of correspondence between I) at least two of the plurality of hypotheses and II) one or more signal parameter values relating to the at least two actually received EM signals, respectively; and (5) determining, based on the at least )two determined levels of correspondence, an estimate relating to a parameter of the wireless receiver device.

EP 3 296 767 A1

**Description**

**TECHNICAL FIELD AND BACKGROUND**

Embodiments disclosed herein relate in general to systems, apparatuses and methods for estimating values relating to operating parameters of wireless receiver devices.

Various positioning and navigation systems for providing users with geographic information are known in the art and widely used in civil and military applications. In general, such geographic information may be descriptive of man-made and/or natural physical parameters of a geographic area including, for example, transport infrastructure configuration (e.g., roadways, public transportation, boardwalks) and venues interconnected by the transport infrastructure.

In addition, the geographic information may be descriptive of an origin and destination point of a movable object (e.g., computerized mobile device, a car or aircraft) in the geographic area, and further comprise customized and appropriate instructions providing a user of the object guidance how to arrive at the destination point.

Many navigation systems are based on space-based global navigation satellite system (GNSS), the most prevalent of which currently being the US-operated Global Positioning System (GPS) and the Russian-operated Global Navigation Satellite System (GLONASS). For many outdoor scenarios, GPS is the preferred positioning system, mainly due to its global coverage and accuracy.

Energy consumption of wireless receiver devices operating in energy-constrained scenarios such as continuous position estimation executed by a processor of a wearable wireless receiver device is relatively high, causing energy stored in the device to drain quickly. The relatively high energy consumption can for example be attributed to the time period required for decoding each one of a minimum of, e.g., four, channels of transmitted electromagnetic (EM) signals to output an estimate of the device's position.

More specifically, satellites may transmit to the Earth EM signals encoding data required to estimate a position, at relatively low bit rates. Due to the low bit rate, a wireless receiver device may have to process received EM signals for a relatively long time period (for example, several seconds ranging, e.g., from 3 to 8 seconds) to decode a sufficient amount of data for estimating a first position of the device. During this time period, energy consumption is increased compared to time periods during which no signal processing is performed for estimating the device's position.

It follows from the aforesaid that a position estimate may not be provided instantly upon initiating the processing of received EM signals for estimating the device's position. There may thus be a latency of, e.g., several seconds from issuing a request to estimate the device's position until an estimate of the device's position is provided.

After a first position of the device is estimated, subsequent position estimates may be output instantly upon request if received satellite EM signals are continuously processed. However, this approach may even further accelerate energy drain from the device.

Another major limitation of GNSS-based navigation systems is that EM signals transmitted from satellites may not be received by wireless receiver devices which are located in geographic areas with limited or no line-of-sight (LOS), causing interruption in the decoding of transmitted signals. For this reason, GNSS-based systems do not operate well in such geographic areas which may include, for example, indoor locations, forests, and areas between steep-sided valleys and high-rises.

Moreover, due to, for example, noise, multipath signal propagation, jamming and/or spoofing, the wireless receiver device might associate a wrong EM signal arrival time to a signal transmitted from a satellite. Such an error leads to inaccuracies when estimating the device's position or may make position estimation infeasible.

The description above is presented as a general overview of related art in this field and should not be construed as an admission that any of the information it contains constitutes prior art against the present patent application.

**GENERAL DESCRIPTION**

The following description of the device, system and method is given with reference to particular examples, with the understanding that such device, system and/or method is not limited to these examples.

The disclosed embodiments relate to a device, system and method for determining an estimate which relates to a parameter (also: "device parameter") of a wireless receiver device such as, for example, the device's position and an associated recordation time stamp of the position; time stamp of recordation of a received signal, and/or of data recordation time; and/or translational velocity of device on Earth; and or any other parameter.

The system comprises a plurality of transmitters operative to emit EM signals encoding data relating to, for example, positioning data and/or other data (including, e.g., signal transmit time, synchronization data, transmitter position data, environment modelling data, system configuration data). These EM signals may be engineered to be receivable by a wireless receiver device and to enable the decoding of navigation data encoded in the received EM signals. Such navigation data may relate to any data that can be used for positioning, navigation and/or related tasks.

It should be noted that merely to simplify the discussion that follows, without be construed as limiting, a "transmitter" may herein also refer to a "satellite" and vice versa.

In an embodiment, the system may be operative to enable the implementation of methods, processes and/or operations for determining an estimate of a value relating to a parameter of the wireless receiver device, by (1) obtaining first data relating to a wireless receiver device and/or the state of the positioning system; (2) establishing, based on the first data, a plurality of hypotheses regarding at least one device parameter value of the wireless receiver device; (3) obtaining second data descriptive of at least two EM signals actually received by the wireless receiver device from a set of at least two transmitters, respectively; (4) determining at least two levels of correspondence between I) at least two of the plurality of hypotheses and II) one or more signal parameter values relating to the at least two actually received EM signals, respectively; and (5) determining, based on the at least two determined levels of correspondence, an estimate relating to a parameter of the wireless receiver device. It is noted that the method and system disclosed herein may also be employed for determining a likelihood that a hypothesis is false. However, merely to simplify the discussion that follows, without be construed as limiting, embodiments and examples referred to herein may relate to determining a likelihood that a hypothesis is correct.

A "state" of the positioning system may for example refer to a current configuration of the system. Further, a "state" of the receiver device may for example refer to a current configuration and/or position of the receiver device.

The expression "level of correspondence" as used herein can also relate to "level of deviation", "level of similarity", "level of consistency", and/or "level of alignment". A level of correspondence may be expressed, for example, by a number ranging from 0 to 1, where "0" indicates least level of correspondence, and "1" indicates maximum level of correspondence. Based on the level of correspondence, a likelihood of a hypothesis may be determined, which may for example be expressed using quantitative measures and/or by qualitative expressions such as "most likely to be true", "least likely to be true", "most likely to be false", "least likely to )be false". Based on the determined "level of correspondence", a likelihood of a hypothesis may be determined. Accordingly, the levels of correspondence can be used for determining a likelihood that a hypothesis matches the signal parameters relating to an actually received signal.

The level of correspondence may be obtained by shifting a correlation function, which is the output of a correlation of a recorded signal with a corresponding satellite spreading sequence stored in the receiver device. A shifted correlation function provides information about the similarity between the received (combined plurality of) signal(s) or channels, and the expected signal of a given transmitter for a given time shift / alignment. This means that if "all" possible alignments are checked, one should get the highest similarity / level of correspondence )for the correct alignment. So, correlation and shifting gives "level of similarity", "level of correspondence", "level of alignment" or similar. It is noted that, alternatively, a received signal may first be shifted and only then correlated with the recorded signal for obtaining the shifted correlation function.

Based on the shifted correlation function, a measure is obtained indicating for each transmitter some measure of likelihood that a signal is present and aligned. For each hypothesis

(according to which the shifting of the raw signal or the correlation function was performed), all these measures are considered together or globally, and may for example be combined (e.g., by computing a product) to get a "global" measure (over all transmitters) of the likelihood that the hypothesis is correct.

It is noted that the term "at least two EM signals" refers to signals which are transmitted by at least two transmitters, respectively, of a set of transmitters.

The term "hypothesis" as used herein may concern a candidate estimate for one or more values of parameters of the receiver device. Accordingly, the terms "hypothesis" and "candidate estimate" may herein be used interchangeably.

In an embodiment, the EM signals received by the wireless receiver device from the at least two satellites may be used jointly for testing a hypothesis concerning a candidate estimate, rather than testing a hypothesis using each EM signal individually. In an embodiment, a likelihood for one or more of the plurality of hypotheses is determined. Based on the likelihoods of one or more hypotheses, a position-time tuple, a local receiver device oscillator bias, and/or any other value(s) concerning one or more device operating parameters may be derived.

It is noted that when a position-time tuple and/or any other value(s) concerning one or more device parameters are estimated based on values concerning signal arrival time (e.g., Time of Arrival (ToA), Time Difference of Arrival (TDOA)); and/or values concerning a position, information could be lost due to the arrival time detection process. More specifically, an arrival time measurement may capture only the most likely arrival time or some number of the most likely arrival times for a given received signal. It is noted that the captured set of arrival times may not contain the true arrival time, when it does not have a high enough likelihood among all possible arrival times. This may especially happen for instance when the background noise level is high or due to different received signal strengths from the different transmitters. However, the observed signal may contain further information relating to other possible arrival times which could prove useful for increasing robustness and/or accuracy of a position-time tuple estimate. Robustness and/or accuracy may be especially increased if the true arrival time is in these other possible arrival times. For example, instead of taking a decision regarding, e.g., a certain signal arrival time for an individual signal without looking at possibly alternative arrival times, embodiments of the method presented and discussed herein may take into consideration (e.g., for determining an estimate of a time-position tuple) the signal arrival times for all signals (e.g., together at once or at the same time). By taking into consideration possible signal arrival times for each one of a plurality of signals together at once, more information is available than when first computing an arrival time for the signals individually and combining the information thereafter.

Moreover, according to some embodiments, the method comprises establishing a plurality of hypotheses, analyze their feasibility, and optionally further compare their feasibilities (e.g., expressed as likelihoods) with one another for inferring and output an estimate relating to an operating parameter, as outlined herein in more detail. In other words, a plurality of hypotheses (regarding some device/operating parameter(s)) and associated likelihoods) may be analyzed (e.g., combined and/or compared) to output an estimate relating to the operating parameter(s). By taking into account a plurality of hypothesis for deriving or determining, e.g., a position-time tuple, of a wireless receiver device, comparatively more information may be available than when employing a method that is based on TDOA. Generally, if the receiver time is )known, TOA can be used, otherwise TDOA can be used to compute device parameters.

Since in the present method "all" the available information may be captured and no information may be discarded prior to taking a decision, it is noted that according to embodiments of the method disclosed herein, EM signal arrival times of each satellite may not necessarily have to coincide perfectly with expected arrival times of respective hypotheses which are selected for determining, e.g., a position-time tuple. Using the method described herein, information concerning received EM signals which may otherwise be lost, may be taken into account for estimating a position-time tuple.

The terms "position-time tuple", "position and associated recordation timestamp", and "position fix" may herein be used interchangeably.

In an embodiment, the system may be configured and operative to estimate the device's values relating to one or more operating parameters (e.g., position-time tuple and/or other parameters) based on one or more signals, (e.g., received from a respective one or more transmitters), recorded during less than 1 second, in 500 milliseconds or less, in 250 milliseconds or less, in 100 milliseconds or less, in 50 milliseconds or less, in 10 milliseconds or less; in 5 milliseconds or less; in 2 milliseconds or less; or in 1 millisecond or less of, e.g., baseband samples. Accordingly, a position fix for instance and/or any other estimate relating to a parameter of the wireless receiver may be determined almost instantly. In an embodiment, an estimate can be determined within a signal observation time duration which is shorter than a time period required to decode a transmit timestamp from an actually received EM signal from a transmitter such as a GNSS Satellite. While embodiments disclosed herein relate to determining an estimate of a wireless receiver based on EM signals of a GNSS, this should by no means be as limiting. Accordingly, an estimate may for example also be determined in connection with Wi-Fi, Cellular Communication (e.g., GSM, 4G), air traffic signals (e.g. ADS-B), and/or any other current or future wireless communication network, standard, and/or system.

The term "recordation time stamp" refers to a time of recordation of a position (or any other parameter) of a wireless receiver device. Depending on the context, such time of recordation may relate to an expected or an actual time of recordation, e.g., of a signal arrival time.

The system may further comprise, in addition to the transmitters, a data source which is external to the plurality of transmitters. In an embodiment, the plurality of hypotheses may be determined, partly based on data received from the external source or only based on data received from the external source. In an embodiment, the plurality of hypotheses may be determined based on a previously determined estimate of device operating parameters and, optionally, based on data received from the external source. In an embodiment, the device's position and associated time of recordation (also: position-time tuple) may be estimated based on first data received from the external source, and further based on second data encoded by the EM signals actually received by the wireless receiver device from the satellites.

The external source may include, for example, a web server storing navigation data. Such web server may herein also be referred to as "navigation server". In an embodiment, a client receiver device may receive navigation information from a navigation server, e.g., via a cellular and/or any other communication network or network infrastructure; from a web server and/or any other external source.

## DESCRIPTION OF THE FIGURES

The figures illustrate generally, by way of example, but not by way of limitation, various embodiments of the device, system and/or method discussed in the present document.

For simplicity and clarity of illustration, elements shown in the figures have not necessarily been drawn to scale. For example, the dimensions of some of the elements may be exaggerated relative to other elements for clarity of presentation. The number of elements shown in the Figures should by no means be construed as limiting and is for illustrative purposes only. Furthermore, reference numerals may be repeated among the figures to indicate corresponding or analogous elements. The figures are listed below.

FIG. 1 is a schematic illustration of a system for determining an estimate concerning a parameter of a wireless receiver device, according to an embodiment;

**FIG. 2** is a block diagram illustration showing the components of satellites, a base station, a navigation server, and a wireless receiver device of the system, according to an embodiment;

**FIGs. 3A-3D** each show a graph which is descriptive of a recorded signal during 1 millisecond after correlation with the corresponding satellite spreading sequence stored in the receiver device, according to an exemplary procedure;

**FIGs. 3E-3H** show the spreading sequence correlograms after time-shifting was applied according to an expected alignment of the corresponding received signals for the true state of the receiver device, according to an exemplary procedure;

**FIG. 4** shows a flow chart of a method for determining an estimate of a value relating to a parameter of the wireless receiver device, according to an embodiment;

**FIG. 5** shows another flow chart of a method for determining an estimate of a value relating to a parameter of the wireless receiver device, according to an embodiment;

**FIG. 6** shows how SNR in the spreading sequence affects the probability P that a wrong estimate is obtained for the value of the device parameter(s) when employing the classical approach and when employing the disclosed methods, according to exemplary procedures; and

**FIG. 7** schematically shows a two-dimensional (2D) space discretization, according to an embodiment;

**FIG. 8** shows a plot of relative frequency difference (ppm) of a local oscillator in an exemplary device compared to the set/desired frequency as a function of time;

**FIG. 9** shows a plot of a likelihood function distribution that were computed for hypotheses in two dimensions, that is, for two device parameters;

**FIG. 10** shows graphs illustrating the dependency between a likelihood threshold and a distance error, which is the distance from the true device location to the obtained location using an embodiment of the method described herein, for various weights relating to a recorded EM signal indicated as a cumulative distribution function of a large number of obtained solutions using an embodiment of the method described herein;

**FIG. 11** shows graphs illustrating the influence on the distance error for various tested signal reception scenarios when estimating device parameter values using an embodiment of the method described herein;

**FIGs. 12A** and **12B** show the resulting plots for experiments that were conducted to test the influence of the time parameter in our likelihood function on the position estimation;

**FIGs. 13A** and **13B** show plots of tests that were conducted to investigate the influence of averaging multiple positions computed from different one millisecond windows (i.e., sliding window average), to better understand the trade-off between accuracy and the amount of data used;

**FIG. 14** shows plots showing the difference in distance error when using the VCTCXO oscillator in the Ettus B200 software radio as opposed to the GPS disciplined oscillator from Jackson Labs;

**FIG. 15** is a schematic block diagram illustration of a product of manufacture;

While some embodiments disclosed herein refer to C/A codes, this should by no means be construed as limiting. Correspondingly, the device, system and method disclosed herein may also be implemented using alternative spreading sequences.

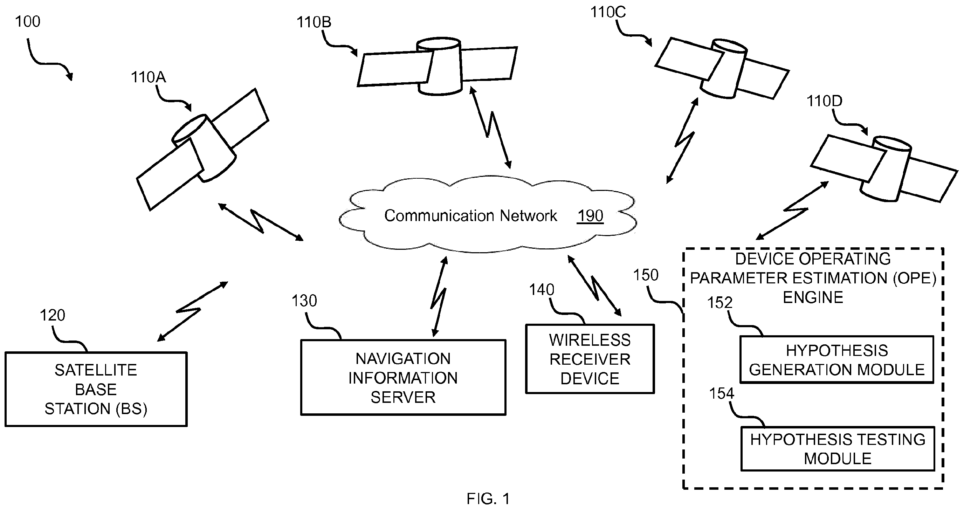

Referring to **FIG. 1,** a system which is operative to determine one or more estimates relating to parameters of wireless receiver devices is herein referenced by alphanumeric label **"100".** System **100** may comprise a plurality of satellites **110** (e.g., satellites **110A-110D),** a base station (BS) **120,** a navigation information server **130,** and a wireless receiver device **140,** which can communicate with each other over one or more communication networks **190.**

The number of satellites **110,** base stations **120,** navigation servers **130** and wireless receiver devices **140** shown in the accompanying figures should by no means be construed as limiting and are for illustrative purposes only.

The terms "wireless receiver device" and "receiver device" may herein be used interchangeably.

Server **130** may be implemented by or include, for example, one or more servers or storage systems and/or services associated with a business or corporate entity, including for example, a file hosting service, cloud storage service, online file storage provider, peer-to-peer file storage or hosting service and/or a cyberlocker.

Wireless receiver device **140** may be comprised in or implemented by, for example, a receiver-only device, a transceiver device, a computerized mobile device, a multifunction mobile communication device also known as "smartphone", a personal computer, a laptop computer, a tablet computer, a personal digital assistant, a wearable device, a handheld computer, a notebook computer, a location tracking device, a navigation system, a fitness (tracking) device, a "smart watch", a photo or video camera, a sensor data logging device, an emergency communication device and/or a vehicular device (e.g., a submarine, a land vehicle, an aircraft, a space vehicle) and/or system.

Generally, system **100** is operative to enable the implementation of a method, process and/or operation for estimating a value relating to one or more parameters of wireless receiver device **140,** for example, by establishing a plurality of hypotheses, testing the hypotheses, and determining, based on an outcome of the testing, likelihood values associated with the hypotheses. Based on the determined likelihood values, a value relating to a parameter of wireless receiver device **140** may be determined (e.g., inferred, derived, computed and/or selected). Such a method, process and/or operation may herein be implemented by a device operating parameter estimation (OPE) engine, referenced by alphanumeric label **"150",** which is comprised in system **100.** OPE engine **150** may for example include a hypothesis generation module **152** for establishing a plurality of hypotheses concerning a parameter of receiver device **140** and a hypothesis testing module **154** for testing the plurality of hypotheses, e.g., as will be outlined herein below in more detail.

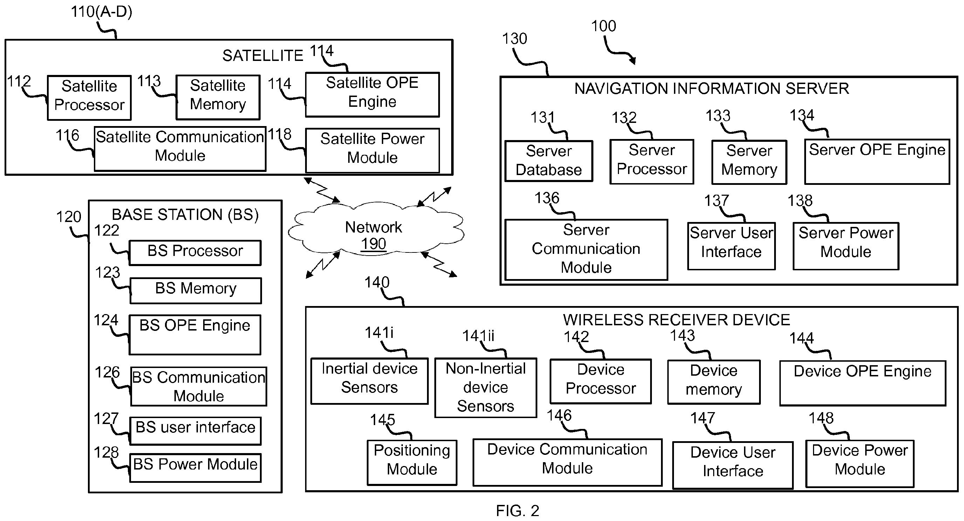

Further referring to **FIG. 2,** satellite(s) **110** may in an embodiment comprise a satellite processor **112**, a satellite memory **113,** a satellite OPE engine **114,** a satellite communication module **116** and a satellite power module **118** for powering the various components and/or engines and/or modules of satellites **110.** Although not specifically illustrated in **FIG. 2,** in the discussion outlined herein, components of satellites **110A-110B** may be indicated with respective labels **"A"** and **"B".** For example, satellite processor **112A** and satellite processor **112B** indicates that these components are included in satellites **110A** and **110B,** respectively.

In an embodiment, base station **120** may include a BS processor **122,** a BS Memory **123,** a BS OPE engine **124,** a BS communication module **126,** a BS user interface **127,** and a BS power module **128** for powering the various components and/or engines and/or modules of base station **120.**

In an embodiment, navigation server **130** may include a server database **131,** a server processor **132,** a server memory **133,** a server OPE engine **134,** a server communication module **136,** a server user interface **137** and a server power module **138** for powering the various components and/or engines and/or modules of navigation server **130.**

In an embodiment, receiver device **140** may include one or more inertial device sensors **141i,** non-inertial device sensors **141ii,** a device processor **142,** a device memory **143,** a device OPE engine **144,** a device positioning module **145,** a device communication module **146,** a device user interface **147,** and a device power module **148** for powering the various components and/or engines and/or modules of receiver device **140.**

The various components of the one or more satellites **110,** base station **120,** navigation server **130** and/or wireless receiver device **140** may communicate with each other over one or more communication buses (not shown) and/or wired and/or wireless signal lines (not shown).

Inertial device sensor **141i** may include, for example, one or more accelerometers and/or gyroscopes. Non-inertial device sensors **141ii** may include, for example, one or more barometers, proximity sensors, altimeters, magnetometers, light sensors, touch screen sensors, receivers of a GNSS, and/or a front and/or back camera.

Satellite communication module **116,** BS communication module **126,** Server communication module **136** and/or device communication module **146** may, for example, include I/O device drivers (not shown) and network interface drivers (not shown) for enabling the transmission and/or reception of data over communication network **190.** An I/O device driver may for example, interface with a keypad or to a USB port. A network interface driver may for example execute protocols for the Internet, or an Intranet, Wide Area Network (WAN), Local Area Network (LAN) employing, e.g., Wireless Local Area Network (WLAN)), Metropolitan Area Network (MAN), Personal Area Network (PAN), extranet, 2G, 3G, 3.5G, 4G including for example Mobile WIMAX or Long Term Evolution (LTE) advanced, Bluetooth®, ZigBee™, near-field communication (NFC) and/or any other current or future communication network, standard, and/or system.

Satellite memory **113,** BS memory **123,** server memory **133** and/or device memory **143** may include one or more types of computer-readable storage media such as, for example, transactional memory and/or long-term storage memory facilities and may function as file storage, document storage, program storage, and/or as a working memory. The latter may for example be in the form of a static random access memory (SRAM), dynamic random access memory (DRAM), read-only memory (ROM), cache or flash memory. As long-term memory they may for example include a volatile or non-volatile computer storage medium, a hard disk drive, a solid state drive, a magnetic storage medium, a flash memory and/or other storage facility. A hardware memory facility may for example store a fixed information set (e.g., software code) including, but not limited to, a file, program, application, source code, object code, data, and/or the like. As working memory, satellite memory **113,** BS memory **123,** Server memory **133** and/or device memory **143** may, for example, process instructions including, e.g., temporally-based and/or non-temporally based instructions.

A power module such as, for example, device power module **138** may comprise an internal power supply (e.g., a rechargeable battery), a solar-power module, and/ or an interface for allowing connection to an external power supply.

OPE engine **150** may be implemented by any suitable device, fully or partially. For example, some implementations and/or portions and/or processes and/or elements and/or functions of OPE engine **150** may be implemented by satellite(s) **110,** base station **120,** navigation server **130,** and/or by receiver device **140.** Clearly, system **100** may optionally comprise a plurality of servers, e.g., one providing navigation data and another one determining an estimate of value relating to a device parameter. Additional or alternative configurations may be considered. Respective implementations and/or portions and/or processes and/or elements and/or functions of OPE engine **150** are herein referenced by labels **114, 124, 134** and **144** denoting "satellite OPE engine", "BS OPE engine", "server OPE engine", and "device OPE engine", respectively, enabling system **100** to operate as disclosed herein. Merely to simplify the discussion that follows, methods and/or processes disclosed herein may be outlined herein in conjunction with OPE engine **150**. Satellite memory **113,** BS memory **123,** server memory **133** and/or device memory **143** may include instructions which, when executed e.g. by the respective satellite processor **112,** by BS processor **122,** server processor **132** and/or device processor **142,** may cause the execution of methods, processes and/or operations for determining an estimate of a parameter of a wireless device. As already indicated herein, such a method, process and/or operation may herein be implemented by and/or referred to as OPE engine **150**. OPE engine **150** may be realized by hardware, software and/or one or more hybrid hardware/software modules.

According to some embodiments, determining one or more estimates of one or more parameters of a wireless receiver device may be performed as outlined herein below.

In an embodiment, first data concerning satellites **110** may be transmitted to OPE engine **150** exclusively over a non-GNSS based system including, for example, terrestrial and/or non-terrestrial communication networks such as, for example, an aerial wireless network, as implemented for instance by "Project Loon" (www.solveforx.com/loon/ - website visited on August 25 2016. In an embodiment, the first data may be fetched by OPE engine **150.** In some embodiments, data may be fetched before any other communication occurs (e.g. the device receiving signals from the satellites. The first data may be descriptive of satellites which have no direct LOS with receiver device **140** and/or satellites which are above horizon relative to the receiver device. The first data may be descriptive of values regarding satellite parameters including, for example, timing information, satellite EM signal emission time $t_e$, position information and/or course of transmitters (e.g., satellites **110**), and system integrity data(or more generally, the state of the positioning system). Optionally, the first data may be descriptive of barometer data, meteorological data and/or an Earth elevation model (for example the USGS elevation model (http://nationalmap.gov/elevation.html, visited on August 8 2016) for determining the altitude of receiver device **140.** By determining in such way the altitude of receiver device **140,** the search space is reduced by one dimension, resulting in less hypotheses to test. The first data may further relate to non-GNSS based information with which receiver device **140** is communicably associated. In an embodiment, the first data may be based on a previous position fix.

In an embodiment, based on the first data received by the OPE engine, a plurality of hypotheses may be established concerning one or more device parameter values of wireless receiver device **140.**

For instance, based on the terrestrial network information received at OPE engine **150,** a plurality of hypotheses may be established regarding possible or feasible position-time tuples ($p_i, t_i$) of receiver device **140** along with a corresponding plurality of candidate sets of satellites **110** which can be expected to be in direct LOS or limited LOS with receiver device **140.** Optionally, the frequency bias of the local oscillator in receiver **140** device may be estimated based on data provided by a terrestrial network.

In an embodiment, OPE engine **150** is operative to obtain second data descriptive of at least two EM signals actually received by receiver device **140** from a set of at least two satellites.

Moreover, OPE engine **150** is further be operative to determine a plurality of likelihoods that a respective plurality of hypotheses explains the one or more signal parameter values relating to the EM signals actually received from the set of at least two satellites.

Merely to simplify the discussion that follows, without be construed limiting, the expression "the set of at least two satellites" may herein refer to satellites **110A-110D.** Accordingly, satellites **110A-110D** schematically illustrated in **FIG. 1** are those which are might be above horizon seen from receiver device **140.** It is noted that, in an embodiment, the actually received EM signal may be used "directly" or "as-is" for evaluating a hypothesis. More specifically, rather than using a selection of values and/or derived values concerning a parameter of a recorded signal (e.g., a certain signal arrival time, received signal frequency and/or received signal strength) for evaluating a hypothesis, the recorded signal may be used "as a whole" for evaluating a hypothesis. Hence, comparatively more data is available for evaluating a hypothesis, which may increase robustness and/or accuracy. It is noted that the term "directly" should not be construed to exclude basic signal processing techniques such as, for example, noise filtering and/or low pass filtering.

According to an embodiment, the level of correspondence may be determined in conjunction with a "shift matching method", as outlined herein below in more detail. The shift matching relies on the available circular correlations, which may be employed for efficiency reasons as the method could alternatively comprise determining the scalar products of the received signals and spreading sequence for each hypothesis that is evaluated. However, while computing the correlations in advance may introduce a small discretisation error, it allows the evaluation of "larger" hypotheses / a range of hypotheses "at once", for example, by multiplying the vectors (entirely) with each other, whose length may correspond to 1 ms of recorded signal time.

Merely to simplify the discussion that follows, embodiments of the system and/or method may be explained in conjunction with likelihoods of a plurality of hypotheses. However, this should by no means be construed as limiting. Accordingly, other measures than "likelihood" may be employed.

In an embodiment, OPE engine **150** may be operative to determine how well a candidate value of a device operating parameter (e.g., a hypothetical time **t** and a hypothetical point **p**) matches the observed EM signal. The actual arrival time of an EM signal emitted from an $i_{th}$ satellite is herein referred to as $t_{a,i}$. Such actual arrival time $t_{a,i}$ may be determined, for example, with respect to a Coarse/Acquisition (C/A) code and/or any other spreading sequence, e.g., known in the art.

The actual arrival time $t_{a,i}$ of the $i_{th}$ satellite's C/A code at receiver device **140** may be considered to depend on the time of emission $t_{e,i}$ when the C/A code was emitted from the $i_{th}$ satellite, and a propagation delay $d_i(p,t)$ between the $i_{th}$ satellite (e.g., satellite **110A)** and receiver device **140**. Either way, an expected arrival time $t_{a,i}$ may thus be expressed as follows:

$$t_{a,i}(p,t) = t_{e,i} + d_i(p,t) \qquad (1)$$

Hence, at time $t_{a,i}$ a new C/A code from satellite **i** can be expected to be received at receiver device **140.** As outlined herein below in more detail, OPE engine **150** may in one embodiment be operative to determine an estimate concerning a parameter of receiver device **140** in a configuration which is in accordance with an assumption that device processor **142** is timed in synchronization with satellite processor **112**. In alternative embodiment, OPE engine **150** may be operative to determine an estimate in a configuration taking into account that device processor **142** is not timed in synchronization with satellite processor **112,** so that OPE engine **150** may compensate for a residual clock offset.

In an embodiment, satellite-receiver clock synchronization may be performed directly and/or indirectly, e.g. through navigation server **130** which may comprise a server clock (not shown) that may be synchronized with each one of satellites **110.**

The different configurations of the system and impact on OPE engine **150** configuration are outlined in more detail further below.

In an embodiment, for a certain hypothesis, a likelihood value may be determined which is indicative of the alignment/matching of the received signal **r(t)** with all the expected signals of the channels from all expected transmitters, respectively. For example, the likelihood may be determined based on the correlation function $c_i(t)$ between the received signal **r(t)** and satellite i's C/A code $ca_i(t)$.

In an embodiment, a correlation function $c_i(t)$ for the $i_{th}$ satellite may for example be defined as the scalar product between all possible arrival times of EM signal **r(t)** and the $i_{th}$ satellite C/A code $ca_i(t)$ stored, e.g., in receiver device **140** and, for example, expressed as follows:

$$c_i(t) = \sum_{\tau=0}^{\tau=1ms} r(t+\tau) \cdot ca_i(\tau) \qquad (2)$$

The C/A code $ca_i(t)$ may be considered an exemplary implementation of an "identifier", which is unique for each satellite and may be predetermined. In some embodiments, additional or alternative identifiers may be used for constructing a correlation function. The time shift $\tau$ may be derived from the frequency of occurrence of the C/A code, e.g., modulo 1 ms because the C/A code may for instance repeat every 1 ms.

It is noted that a correlation function may in embodiments be defined in an alternative manner. Accordingly, additional or alternative mathematical operations may be applied than computing for all possible arrival times of EM signal **r(t)** the scalar products with the C/A code $ca_i(t)$ (e.g. Euclidean distance, sum of absolute differences).

However, merely to simplify the discussion that follows, without derogating from the aforesaid and be construed as limiting, examples and embodiments herein below refer to a correlation function $c_i(t)$ which is constructed by computing the scalar product between all possible arrival times of EM signal r(t) and the $i_{th}$ satellite C/A code $ca_i(t)$ stored, e.g., in receiver device 140.

In an embodiment, a likelihood value may be determined using, e.g., a hypothesis validator. Such hypothesis validator may be applied on the correlation functions $c_i(t)$, e.g., by shifting the latter by a time shift value which can be related to, for example, an expected arrival time of the EM signal r(t). Alternatively, EM signal r(t) may be first shifted and then correlated with the C/A code, as expressed in the equations below.

$$r_{i,shifted}(t) = r(t + t_{a,i}(p,t)) \qquad\qquad (3)$$

The time shift is determined for each correlation function $c_i(t)$ of the satellites individually according to the hypothesis. It is noted that a hypothesis contains the required information to determine the propagation delay between a satellite position and a hypothetical position at a given EM signal transmit time stamp.

A shifted correlation function $c_{i,shifted}(t)$ can be expressed as follows:

$$c_{i,shifted}(t) = \sum_{\tau=0}^{\tau=1ms} r_{i,shifted}(t + \tau) \cdot ca_i(\tau) \qquad\qquad (4)$$

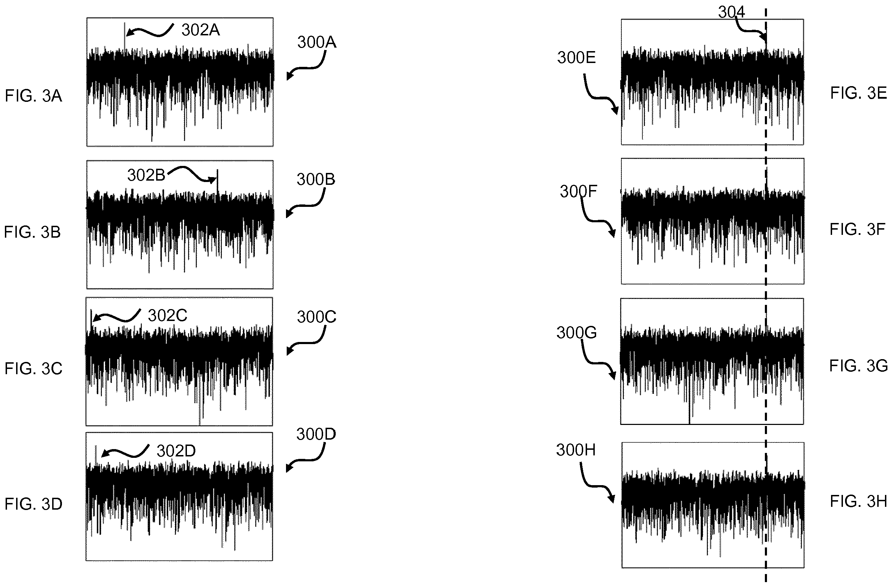

Reference is made to **FIGs. 3A** to **3D,** showing the correlation functions $c_i(t)$ for the received signal **r(t)** and the **$ca_i$** codes of satellites **A-D** for a time period τ that is the duration of C/A code duration (here exemplarily: 1 millisecond). In this particular example, the starting times of the C/A codes respective of the received EM signals **300A-300D** can readily be identified by the occurrence of peak amplitude (also: spikes) **302A-302D**. These signals are based on a raw signal received by the Ettus software defined radio via an external GPS antenna.

Further referring to **FIGS. 3E-3H,** in the experiments, time shifting was applied to the actually received EM signal **r(t)** in accordance with an expected time delay **$d_i(p,t)$** according to a hypothesis. The peaks in the correlograms only align when shifting is done according to a correct hypothesis (correct receiver position and/or other parameters). For most hypotheses, none or at least not all peaks will align. Since in **FIGs. 3E-3H** the exemplified time shifts applied on the actually received EM signal match or substantially match a correct hypothesis, the time-shifted correlation signals **$c_{i,shifted}$** are aligned or substantially aligned with each other. The alignment between time-shifted versions of the actually received EM signals is schematically illustrated by dashed line **304,** with respect to the start time of the C/A codes of the four satellites. The values according to which the correlation functions are shifted may herein be referred to as "hypothesis validator".

In the example shown with respect to **FIGS. 3E-3H,** the correlation vectors are shifted according to a correct distance for each satellite, so that the arrival times of each of the satellite's C/A code align or substantially align. Conversely, for a position not coinciding with the actual receiver position, the shifted peaks may not align as well. Embodiments of the system and method disclosed herein may include determining an indication how well the peaks of the CA codes of the shifted correlation functions align for a candidate estimate concerning a hypothesis. For instance, the shifted correlation functions may be summed or otherwise compared against each other to determine a measure of a difference (or alignment) between CA codes of the shifted correlation functions.

In an embodiment, to quantify a level of correspondence, which may indicate a level of alignment, between such time-shifted EM signals, OPE engine **150** may determine a scalar product **$s_i(p,t)$** between the time-shifted EM signals and the **$CA_i$** code of satellites **110**. The obtained scalar product **$s_i(p,t)$** can be considered to represent a correlation value between the expected arrival time at position **p** and time **t**, and the actual EM signals arrival times, as indicated in the below equation:

$$s_i(p,t) = \sum_{\tau=0}^{\tau=1ms} r\left(t + t_{a,i}(p,t) + \tau\right) \cdot ca_i(\tau) = c_i\left(t + t_{a,i}(p,t)\right) = c_{i,shifted}(0) \quad (5)$$

In an embodiment, for each one of the plurality of hypotheses, a corresponding level of correspondence (e.g., correlation value) may be determined. The closer a candidate position-time tuple **$(p_i,t_i)$** and corresponding expected propagation delay is with respect to the EM signals actually received, the higher may be correlation value **$s_i$**. Correspondingly, the further away a candidate position-time tuple **$(p_i,t_i)$** and corresponding expected propagation delay is with respect to the EM signals, the lower may be correlation value **$s_i$**. It is further noted that in scenarios where actually received EM signals are heavily attenuated and/or reflected, correlation functions **$c_i(t)$** may be largely random and, hence, unpredictable.

Compared to localization methods that require for each one of the individually determined **$s_i$** to have a relatively "good" EM signal for determining localization values because the EM signal arrival times are for each satellite determined separately, the method disclosed herein employs a "global" approach by taking into account a combination of the set of shifted correlation functions. Otherwise stated, it is sufficient that the set of correlation functions exhibits "as a whole" or "globally", acceptable signal quality properties.

Considering for instance a scenario where receiver device **140** is located in an area with no direct LOS with at least one of the satellites that are above horizon, the spike of the C/A code of the least one satellite taken individually may be very weak and hardly or not detectable due to noise. However, when the hypothesis is correct and for instance the sum of the shifted correlation functions of all satellites above horizon is determined, the result is nevertheless expected to exhibit a spike of sufficient amplitude indicative of the correctness of the hypothesis. Taking for instance the sum of the shifted correlation functions may cause "amplification" of the C/A code, provided that the hypothesis is correct. Even if for all satellites above horizon, the C/A codes are very weak or not detectable when taking the shifted correlation functions individually, taking the sum or any other suitable combination of the shifted correlation functions is expected to render the C/A codes detectable, provided the shifting was done according to a correct hypothesis.

In an embodiment, OPE engine **150** of system **100** may be operative to select, based on the plurality of correlation values $s_i(t)$ one or more parameter values relating to the plurality of the hypotheses.

For example, OPE engine **150** may select of the plurality of levels of correspondences the value(s) of a hypothesis with maximum likelihood, e.g., as outlined herein below. A likelihood function may for example be constructed which may be expressed as a product of correlation values respective of a set **V** of potentially visible satellites (or expected to be visible) in correspondence with a respective candidate position-time tuple $(\mathbf{p_i, t_i})$ of a certain hypothesis, e.g., as follows:

$$L(p,t) = \prod_{i \in V} s_i(p,t) \qquad\qquad (6)$$

A receiver position parameter value **p\*** and **t\*** may then be selected as the point p which maximizes the likelihood measure:

$$(p^*, t^*) = \underset{p \in F}{argmax} L(p,t) \qquad\qquad (7)$$

where F designates a set of feasible or likely positions and times of the receiver device **140.** The set **V** of potentially visible satellites is assumed to be the same for all feasible positions **(p,t)**∈**F.** The set **V** can be described as a function of a position **p** and a time **t** of receiver device **140.** For a candidate position **p** at a time **t** of receiver **140,** and further based on first data descriptive, *inter alia,* of ephemerides information, the satellite positions of a corresponding set **V** of potentially visible satellites may, in an embodiment, be determined for all feasible positions of receiver device **140.** Satellites that are above the horizon can be added to the set of **V.**

In an embodiment, Earth rotation during signal transmission, which can slightly alter satellite elevation angle, may be taken into account for determining the plurality of hypotheses including, for example, the positions of satellites of a set **V.** In another embodiment, Earth rotation may not be taken account, i.e., neglected, for example, because variations of a satellite's position **p** by a few kilometers does not change the elevation angle of the satellites significantly due to the comparatively large distance of the satellites to the Earth.

In an embodiment, instead of constructing a likelihood function by multiplying the values describing the correlation functions, their logarithms may be taken and added, e.g., to prevent data type overflow or saturation. Clearly, additional or alternative likelihood functions may be constructed for determining an estimate relating to a parameter of receiver device **140.**

Based on the selected one or more device parameter values, an estimate of a value relating to a parameter of receiver device **140** may be determined by OPE engine **150.**

In an embodiment, such determined estimate may be the one which maximizes the above noted likelihood function.

Additional or alternative approaches based on likelihood may be employed for determining an estimate relating to a parameter of a receiver device. For instance, OPE engine 150 may be configured to select, from the plurality of hypotheses which have a likelihood that is above a likelihood threshold, two or more values relating to parameters of receiver device **140** such as, for example, e.g., position estimates and associated signal recordation timestamp tuples $(\mathbf{p_i, t_i}).$ Optionally, such likelihood threshold may be defined as a percentage (e.g., 80% or higher) of the maximum likelihood (100%). Optionally, OPE engine **150** may then be configured to determine a weighted average for the selected values. The weights for the selected values may relate (e.g., correspond), respectively, to the likelihoods of the values. More specifically, the higher the likelihood of a hypothesis, the higher the weight that is associated to the respective value. This may increase accuracy and robustness of the method and system described herein. In some embodiments, the method which includes weighted averaging may be applied. In some other embodiments, maximum likelihood may be applied. Optionally, a value may be determined based on a regular, i.e., equally weighted average of values of candidate estimates, for example, when neighboring sample points map to the same indices in the correlation, which )means that multiple points have the same maximum value of our likelihood distribution. In an embodiment, a likelihood threshold may relate to a level of correspondence; received signal strength of actually received EM signals; a receiver device parameter; a transmitter parameter; a predetermined value; and/or information obtained relating to an environmental parameter.

Optionally, a value may be determined based on a median likelihood. Additional or alternative statistical measures may be applied for determining an estimate of a value relating to a parameter of receiver device **140.**

In an embodiment, alternative approaches (e.g., least-square error approach) may be employed for determining an estimate relating to receiver device **140** based on the plurality of hypotheses. For instance, a position may be determined for each combination of candidate )peaks of the hypotheses using the C/A code correlation functions. The position-time tuple ($\mathbf{p},\mathbf{t_r}$) that may be provided as an output may be for example the one with the smallest least squares error. Additional or alternative error measures may be employed. In an embodiment, the least-square error approach may be employed in combination with determining likelihoods of hypotheses of candidate estimates. For instance, for a selection of hypotheses and their associated candidate estimates, least-square error may be employed to determine an estimate output.

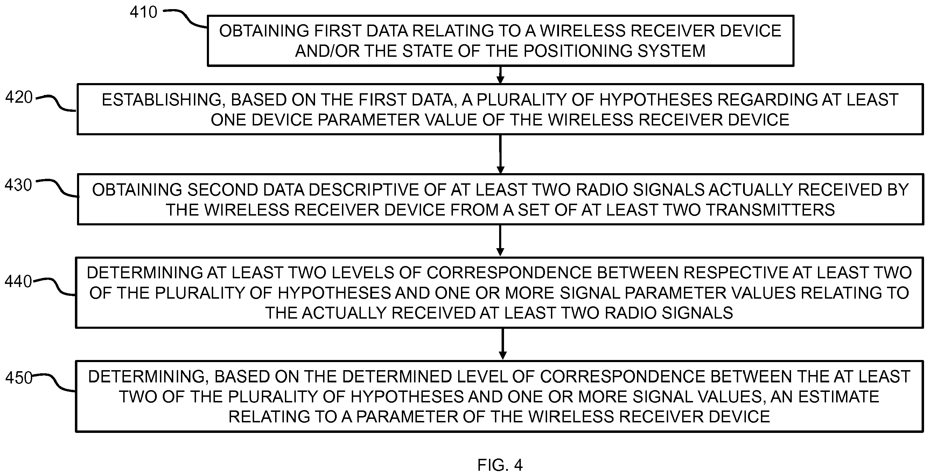

Further reference is now made to **FIG. 4.** A method for determining an estimate relating to a parameter of a receiver device may include, in an embodiment, obtaining first data relating to a wireless receiver device and/or the state of the positioning system (block **410**). In an embodiment, the method may include establishing, based on the first data, a plurality of hypotheses regarding at least one device parameter value of the wireless receiver device (block **420**). In an embodiment, the method may include obtaining second data descriptive of at least two EM signals actually received by the wireless receiver device from a set of at least two transmitters (block **430**). In an embodiment, the may include determining at least two levels of correspondence between respective at least two of the plurality of hypotheses and one or more signal parameter values relating to the actually received at least two EM signals (block **440**). In an embodiment, the method may include determining, based on the determined level of correspondence between the at least two of the plurality of hypotheses and one or more signal values, an estimate relating to a parameter of the wireless receiver device (block **450**).

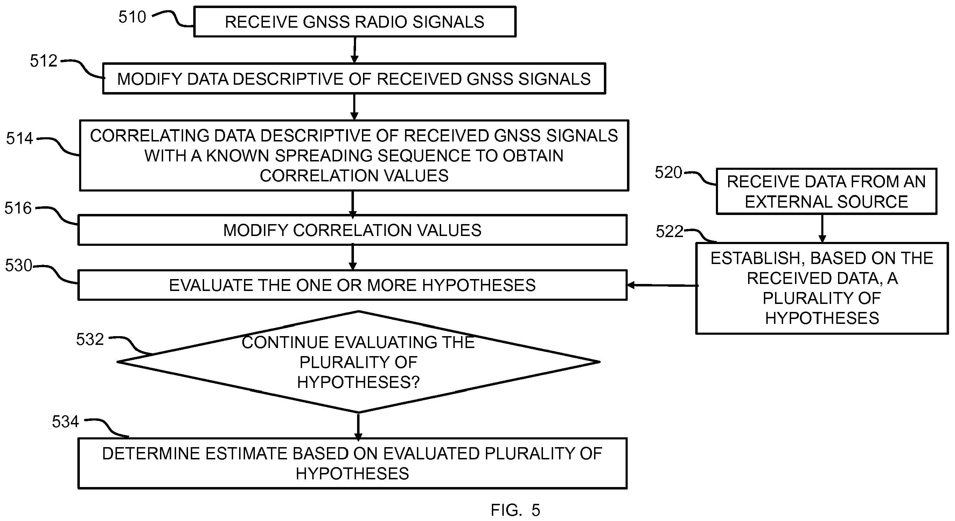

Additional reference is made to **FIG. 5**. A method for determining an estimate relating to a parameter of receiver device **140** may include, in an embodiment, receiving EM signals (block **510**) such as, for example, GNSS signals, via device communication module **146** which may comprise an antenna (not shown) and an RF front end (not shown). The EM signals may be received from a transmitter including, for instance, a satellite. In an embodiment, the method may further include modifying data descriptive of received EM signals (block **512**), e.g., including upsampling and/or filtering, to obtain modified data. Merely to simplify the discussion that follows, data descriptive of a modified EM signal and data descriptive of an EM signal which was not modified, may herein be collectively referred to as "EM signal data".

In an embodiment, the method may include correlating the EM signal data descriptive of received GNSS EM signals with a known spreading sequence (block **514**) like, e.g., a pseudorandom C/A code of a GPS signal, to obtain correlation values. In an embodiment, the method may further include modifying the correlation values (block **516**), e.g., by squaring the correlation values. Merely to simplify the discussion that follows, the terms "correlation values" and "modified correlation values" may herein be collectively referred to as "correlation data".

In an embodiment, the method may include receiving data from an external source (block **520**). An external source may for example include navigation server **130.** In an embodiment, the method may further include establishing, based on the data received from the external source, a plurality of hypotheses (block **522**) relating to a respective plurality of candidate estimates.

In an embodiment, the method may further include evaluating or testing the one or more hypotheses (block **530**), e.g., by determining a likelihood of the selected one or more hypotheses.

In an embodiment, only a selection of hypotheses may be evaluated. For instance, depending on the obtained likelihoods, the evaluation of the one or more hypotheses may be continued or terminated (block **532**). For instance, if for a number of evaluated hypotheses an evaluation-termination criterion is met, additional or remaining hypotheses may not be evaluated and an estimate may be determined based on the evaluated hypotheses. In an embodiment, such evaluation-termination criterion may for instance refer to a threshold defined by an accumulated value of likelihoods, a median likelihood, an average likelihood, and/or the like.

In an embodiment, based on the evaluated plurality of hypotheses, an estimate concerning an operating parameter of receiver device **140** may be determined (block **534**).

An example Pseudocode Implementation of method steps **510-534** is outlined herein below:

$f_s$ = sampling frequency
(p,t) = hypothesis (including e.g. position and time)
V = {$v_1$, $v_2$, ... , $v_n$} set of (potentially) visible satellites at x

v ← neutral vector (filled with zeroes (for sum) or ones (for product)) **for all $v_i$ do**

$c_i$ <- correlation of the signal with $v_i$'s code at the estimated frequency at x $t_{a,i}(p,t)$← estimated signal propagation time between p and satellite $s_i$ at time t

(propagation time depending mainly on distance)

$c_i$ <- circular shift ($c_i$, round($t_{a,i}(p,t) * f_s$))
shift by fractional amount of samples by interpolating sample values)
v ← v {+, *} $c_i$ (pointwise operation)

**end for**
likelihood = max(v)

Embodiments of the system and method disclosed herein may be comparatively more noise-tolerant, accurate and robust in determining a value relating to a parameter of receiver device **140.** Considering for instance the following mathematical term for a EM signal actually received:

$$r(t) = \sum_{i=0}^{N} ca_i(t - \tau_i) + n(t) \qquad (8)$$

wherein noise is expressed as $n(t)$, which is mixed with $ca_i(t - \tau_i)$ expressing the time shifted versions of the C/A code.

Correlation using the classical approach with one of the C/A codes contained in the actually received EM signal leads to the following correlation function:

$$c_j(t) = \left( \sum_{i=0}^{N} ca_i(t - \tau_i) * ca_j(t) \right) + n(t) * ca_j(t)$$

$$(9)$$

Considering that the auto-correlation of the C/A code may lead to the Kronecker delta:

$$\sum_{i=0}^{N} ca_i(t - \tau_i) * ca_j(t) = P_{ca_i} \delta(t - \tau_i)$$

$$(10)$$

It can be concluded that the correlation function c(k) assumes one of two values:

$$c(t) = \begin{cases} P_{ca_j} + n(t) \text{ if } t = \tau_j \\ \quad n(t) \quad \text{else} \end{cases} \qquad (11)$$

$Pca$ represents the power at which the C/A code is received.

The approach known in the art to GPS localization may detect wrong peaks in the correlation function if the Signal to Noise Ratio (SNR) is bad:

$$P[\, c(t = \tau_i) < c\big(t \neq \tau_j\big)] \; = P\left[1 > \mathcal{N}\left(0, \frac{2 \cdot P_{ca_j}}{SNR}\right)\right]^n$$

$$(12)$$

where n is the number of samples that are considered for each C/A code correlation and hence the set of correlation values from which the correct arrival time is selected when employing the approach known in the art.

In contrast, in the embodiments disclosed herein, the failure probability may be comparatively lower because for a correct candidate position p the corresponding C/A code energies multiply (left side of mathematical term). Even though the noise terms (right side) multiply as well, their effect is less severe.

$$P\left[\mathcal{N}\left(1, \frac{1}{SNR}\right)^{|V|} > \mathcal{N}\left(0, \frac{1}{SNR}\right)^{|V|}\right]^n$$

$$(13)$$

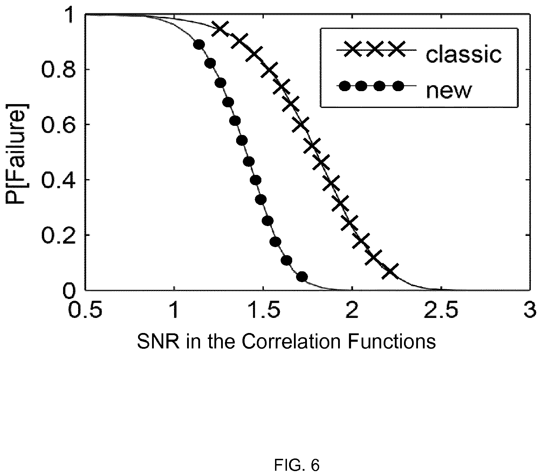

Referring now to **FIG. 6,** a first graph (designated with "dots") of an experiment is shown demonstrating the dependency between SNRs of the correlation function of the classical approach, and the probability **P** that a wrong estimate is obtained for the value of the device parameter(s) when using the classical method. Further, a second graph (designated with "crosses") of an experiment is shown demonstrating the dependency between the SNRs of the correlation function constructed using the shift-matching method, and the probability **P** that an erroneous arrival time or a wrong position estimate is determined when employing the shift-matching method. The SNR of the correlation functions may directly relate to the probability selecting a wrong arrival time **t** or a wrong position **p.**

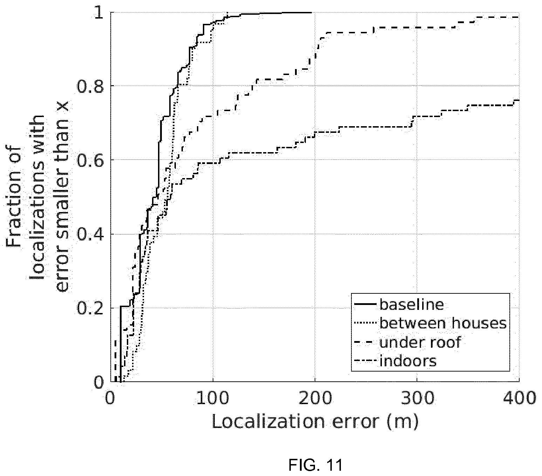

The experiments that were performed demonstrated that for decreasing levels of two SNR correlation functions of the classical method and the shift-matching method, the probability **P** to select the wrong peak signal is consistently lower in the shift-matching method. As shown in **FIG. 5,** for extreme values of SNR in the correlation functions, the classical and the shift-matching methods provided about the same level of reliability. It may thus follow that shift-matching may outperform the classical solution employed by GPS, Cellular Telephone Networks (CTN) even in comparatively difficult SNR scenarios, exemplified by the graphs shown in **FIG. 11** referred to herein below and designated as "between houses", "under roof" and "indoors".

In an embodiment, the shift-matching correlation signal may be integrated during a recorded signal time period of, e.g., 1 milliseconds, to reduce the correlation signal's SNR. In the experiment that was performed to compare between the classical and the shift-matching method, both the shift-matched and classical correlation signals were integrated during a correlation time window of 1 millisecond. The SNR of the signal that was actually received by receiver device was initially much lower (roughly 26dB below the noise floor).

As was briefly mentioned herein above, a clock (not shown) (also: "receiver clock") of device processor **142** may or may not be synchronized with a clock (not shown) of satellite processor **112.** For the experiments that were performed and the results of which are described herein, it was assumed that device clock is synchronized or substantially synchronized with GPS time. Considering for example a scenario where device clock time $t_r$ is synchronized with GPS time with $\delta = \pm 5ms$ of synchronization error. Hence, the expected propagation delay $d_i(p, t_r)$ determined may be inaccurate. However, the resulting propagation delay errors may relatively small because, generally, positions of satellites **110** relative to receiver device **140** change less than 5 meters during 5 milliseconds. Assuming that receiver device **140** moves slower than the satellites, the propagation delay estimation error may no larger than for instance $\frac{10m}{c} = 34ns.$

According to the latter scenario, it may thus in one embodiment be assumed that $d_i(p,t) \approx d_i(p,t_r),$ i.e., the propagation delay is approximately the same, regardless of whether the correct value for time (t) or the slightly incorrect one ($t_r$) are used, because the synchronization error is smaller than the sampling period at *8MHz* (common sampling rate for GPS receivers).

However, neglecting clock offset by assuming clock synchronization may in some scenarios cause measurements errors which are not negligible. For instance, not only will the propagation delay $d_i(p,t)$ be incorrectly calculated, but also the actual EM signal arrival time will be determined as $s_i(p,t_r)$ instead of $s_i(p,t)$ because the received signal is, in reality, not synchronized with GPS time. When neglecting the estimation error on $d_i(p,t),$ the EM signal actually received may be expressed as follows:

$$s_i(p, t_r) = \sum_{\tau=0ms}^{1ms} r\big(t + \delta + t_{a,i} + \tau\big) \cdot ca_i(\tau)$$

$$( 14 )$$

In the example where $\delta = \pm 5$ ms>> 125 ns = $T_s$, the actually received EM signal $s_i(p,t_r)$ may, when applying the shift-matching method, most likely be compared against an incorrectly shifted version of the satellites C/A code, when the synchronization error $\delta$ is not taken into account.

In view of the aforesaid, OPE engine 150 may, in some embodiments, be configured such that a synchronization error $\delta$ is taken into account. It is noted that, at least for some scenarios, a synchronization error $\delta$ may be considered to be the same for all satellites that are member of the set V of potentially visible satellites respective of the plurality of hypotheses, e.g., satellites which can be considered to be above the horizon for a respective one of a plurality of candidate positions of receiver device 140.

In an embodiment, to take into account for a synchronization error $\delta$, the above-noted likelihood function (equation **4**) may be adapted in accordance with a local clock offset $\delta$ that maximizes the likelihood of a candidate position **p** and receiver time $t_r$, which may for example be expressed as follows:

$$L(p, t_r) = \max_{\delta} \prod_{i \in V} \sum_{\tau=0ms}^{1ms} r\big(t_r - \delta + t_{a,i}(p, t_r) + \tau\big) \cdot ca_i(\tau)$$

$$( 15 )$$

The adapted likelihood-function expresses the procedure in which for each satellite the respective correlation function is shifted according to the estimated propagation delay. The relative shifts between different satellites from which EM signals are actually received may be assumed to be fixed for a given position **p** and an inaccurate receiver time $t_r$ because, as already mentioned herein above, $d_i(p,t) = d_i(p,t_r)$.

For a correct hypothesis for position **p** of the plurality of hypotheses, and hence correct delay $d_i(p,t)$, the shifting of the correlation functions causes the peaks of the C/A codes of the actually received and shifted EM signals $r_{i,shifted}$ respective of the satellites, to align with each other. Conversely, if a hypothesis concerning a position of receiver device **140** is wrong, the expected propagation delays $d_i(p,t_r)$ are unlikely to correspond to the recorded data descriptive of the actually received EM signals.

In an embodiment, a delay $d_i(p,t_r)$ (or corresponding distance $\Delta_{p,i}$) from a point **p** to a satellite i is calculated. It is noted that a distance between **p** and a satellite **i** (e.g., satellite **110A**) depends on the satellite's position, which depends on the EM signal transmit time, which depends on the distance. In other words, there may be circular dependencies. These dependencies may be expressed by the following mathematical terms:

$$\Delta_{p,i} = d\big(p_i\big(t_t(p, t)\big), p\big)$$

$$( 16 )$$

$$t_t(p, t) = t - \frac{\Delta_{p,i}(t)}{c}$$

$$( 17 )$$

wherein $d(.,.)$ denotes the distance function, $t_t$ the transmit timestamp of the EM signal at the satellite and $p_i$ the satellite position at the transmit timestamp $t_t$ and which is determined from the satellite's ephemeris.

In an embodiment, OPE engine **150** may determine the values of the above-noted functions **14** and **15** by employing a fixed-point iteration procedure, .e.g., by alternatingly applying functions **14** and **15,** as assignments from the right to the left hand side, of the functions' equations, until the fixed-point iteration procedure converges to a value which is below a threshold. The fixed-iteration procedure works well because of the comparatively large difference between the satellite speeds and the speed of light, so the satellite speeds negligibly affect the propagation delay between the satellite and receiver device **140.**

Example of an implementation of a fixed-point iteration procedure:

[1] Considering that the EM signal propagation times from a satellite to a receiver on Earth may for example between 67 and 86 ms, and the maximum satellite speed relative to a receiver on Earth may be considered to be 929 m/s. Therefore, considering a signal transmit timestamp $t_t = t - (67+86)/2$ ms = t-76.5 ms the initial error in satellite range is at most **(86-76.5)ms·929m/s=8.83m.** The second iteration then starts with a new estimate of the transmit time $t_t$, whose error is at most 8.83m/c=19.4ns. The new satellite range computed from this time will then have a negligible error of 19.4ns·929m/s=18m, which is below a threshold of, e.g., 20 m. Thus, in this example, the fixed-point iteration procedure may be terminated after two iterations. The fixed-point iteration is applied for **each** candidate position-time tuple.

[2] It should be noted that for a given satellite, there are multiple locations on earth for which the propagation delay between position and satellite has the same sub-millisecond part. In order to obtain a unique solution, the search space may be restricted in size, for the reason set forth below. Assuming correct time, points within the search space cannot be apart by more than 1ms*(speed of light) which is roughly 300km to be guaranteed to obtain a unique solution. If the search space is constricted to a sphere of radius roughly 150km, there cannot be multiple points that cause the same sub-millisecond shifts and hence the likelihood function should contain a unique solution (still assuming correct time). Similarly, the search space in time has to be restricted as well. Since a satellite travels up to 929m/s relative to a receiver on Earth, after x seconds, the satellite may have travelled x*929m/s. Hence the distance between satellite and receiver may be wrong by roughly 1km for each second of clock inaccuracy. As a result, the constraint on the size of the search space is the following (r is the radius of the search sphere in space,

$$r + t \cdot 929 \frac{m}{s} < 0.5 ms \cdot c$$

t is the size of the search space in the time domain ($\pm t$) :

In an embodiment, OPE engine **150** may be operative to determine an estimate of a position-time tuple **(p,t_r)** and/or any other parameter relating to receiver device **140** based on a signal recording time duration **t_rec** of an actually received EM signal which can be, for example, 1 second or less, 500 milliseconds or less, 250 milliseconds or less, 100 milliseconds or less, 50 milliseconds or less, 10 milliseconds or less; 5 milliseconds or less; or in 1 millisecond or less. Hence **r(t)** may be correspondingly defined for a duration of [0, $t_{rec}$], e.g., [0, 500 milliseconds], [0, 250 milliseconds], [0, 100 milliseconds], [0, 50 milliseconds], [0, 10 milliseconds], [0, 5 milliseconds], [0, 1 millisecond], beyond which a likelihood function (see further below) would then run out of data. Optionally, propagation delay **d_i(p,t)** may be determined based on the clock of receiver device processor **142.** Hence, propagation delay **d_i(p,t)** may be determined such that the recorded EM signal covers sufficient data to determine an estimate, e.g., of a position-time tuple **(p,t_r).** In an embodiment, it may be assumed that for a signal recording time duration of less than, e.g., 1 millisecond compared to less than 1 millisecond, the propagation delay **d_i(p,t)** does not change significantly. Hence, for the sub-millisecond overflow, r(t) = 1 milliseconds. Similarly, for longer recordation durations, overflow of less than 1 millisecond may be rounded accordingly.

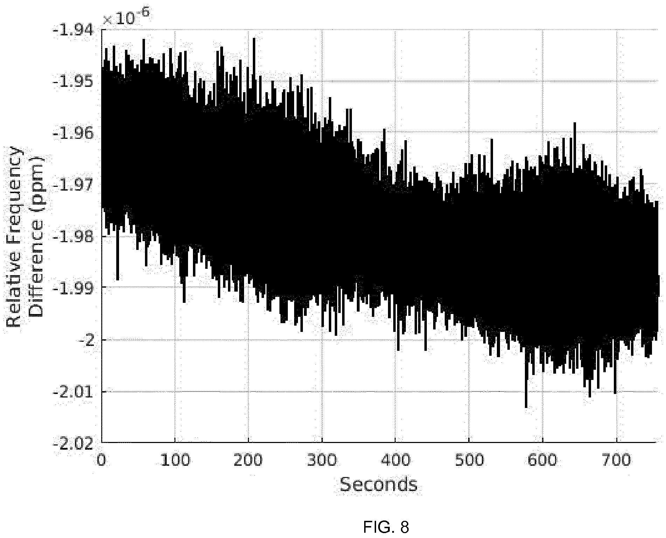

In an embodiment, the frequency error of the local oscillator (LO) in the front end of receiver device **140** may be addressed. Generally, the LO in the front-end of receiver device **140** may not only used for the generation of the reference frequency for the frequency down-conversion, but also for the sampling rate of the ADC, the LO error also affects the effective sampling rate. This influences two parameters. First, the observed frequencies of the signals change again. Second, the time that passes per sample changes. However, in an embodiment, it may be considered that the largest part of the error may be considered to be substantially constant, that is the temperature and random components may be considered to be small compared to the constant term. This is demonstrated in the below example with respect to **FIG. 8.**

It is noted that in an embodiment, the LO offset may be tracked by determining the C/A code correlation functions for different frequency offsets. In an embodiment, the method may include observing the Doppler shifts of the satellites which in turn could be used to estimate the LO offset. In an embodiment, the method may include estimating the LO offset only instead of the sum of the LO offset and the Doppler shifts of each satellite, when the first data is based on non-GNSS data and/or based on a previous position fix.

Thus, most of the error may be eliminated. Otherwise one would not have been able to estimate the observed frequencies of the GPS signals accurately enough to compute a fix since for the L1 frequency, which can be, for example, 1.57542 GHz, each ppm error in the frequency corresponds to an absolute frequency error of 1575.42 Hz.

Reference is made to **FIG. 8,** which shows a plot of relative frequency difference (ppm) of a local oscillator in an exemplary device compared to the set/desired frequency as a function of time. FIG. 8 shows that local oscillator frequency biases are not totally stable, but however vary only very little compared to the total magnitude of the error. This was determined using the tracking algorithms of the classical GPS, but one could also compare against a rubidium oscillator, for instance.

In embodiments, an optimization method may be employed for efficiently selecting, based on the determined likelihoods, one or more candidate estimates which are distributed in a "search space". The search space is spanned by various receiver device parameters such as, for instance, time and position of the receiver device.

In an embodiment, the optimization method may include discretizing the search space, e.g., as outlined herein in more detail, to obtain a discretized search space and apply optimization for determining the estimate. The optimization may be deterministic and/or randomized.

A search space may be divided into at least two subspace, of which one may be selected for further evaluation according to an upper and lower bound associated with each one of the at least two subspace. The subspace that is selected is the one that contains the optimal solution. For the selected subspace the above procedure may be repeated until a subspace yields a selection criterion for selecting one or more candidate hypotheses based on which an estimate concerning a parameter of receiver device **140** may be determined. It is noted that for the initial space branched subspace the likelihood's lower bound may be known, while the upper bound may be estimated.

The boundary criteria may relate to an upper or lower bound (depending on the optimization goal) on the optimal solution in the subset, and discard this subset if it cannot produce a better solution than the best one found so far. In an embodiment, the method may include enumerating the candidate solutions of the remaining subset.

In an embodiment, the search space, which may be spanned by parameters of, e.g., position, time and, optionally, additional more parameters, into layers of different "granularity". In the "lowest" layer, there are the original hypotheses. Hypotheses on higher layers represent all hypotheses of the next lower layer to which this hypothesis is the closest in this layer (in each dimension).

In an embodiment, an upper bound on the achievable likelihood in an area may be calculated as follows: Let $\Delta d$ denote the maximum distance between a hypothesis representative of an area and a point in this area. Then, the maximum time difference of signal arrival between a point and the hypothesis is $\Delta t := \Delta d/c$.

This means, that the shift of the correlation for a point in the area can differ from the shift for the center by at most $\Delta t$. Thus, an upper bound is the likelihood determined based on the vector derived from the correlation by replacing a value with the maximum value in a "window" around it, where the size of the window is $2\Delta t$ ($\Delta t$ to both sides). This can for example be done by pre-processing the correlation vectors with a sliding window maximum algorithm.

To get some solutions early on (to be able to faster reject whole areas), method may include determining the likelihood of the center point when considering an area.

In an embodiment, a best-first branch and bound algorithm may be employed, which first considers the solution sets with the highest upper bound on the likelihood or likelihood of a solution already found in it, which is the same principle as in the **A\*** search algorithm. Additional or alternative methods may be employed.

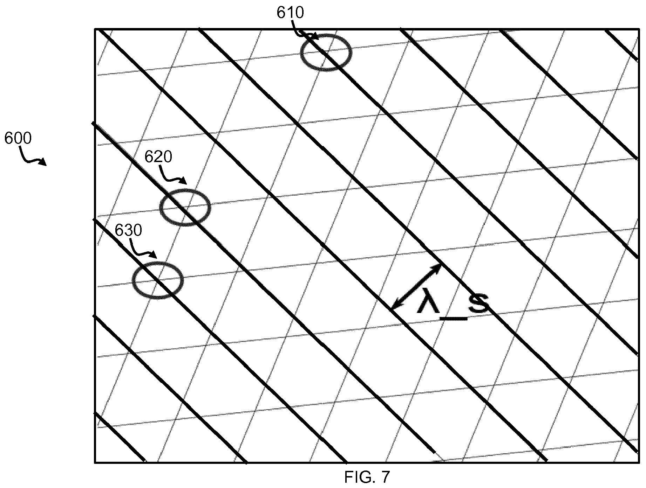

Reference is now made to **FIG. 7.** Discretization of the search space may be accomplished, e.g., as outlined herein below, by OPE engine **150.**

It is known that GNSS systems are inherently discrete, i.e., the received EM signals are modulated with discrete PRN sequences and the EM signal arriving at receiver device **140** is discretized through sampling at a sampling frequency. The corresponding "length" of a sample is $\lambda_S = \frac{c}{f_S}$, where $c$ represents the speed of light. The arrival time of an EM signal can only be rounded to the next sample, which means that range measurements can be wrong by up to $\lambda_\mathbf{s}$**/2.** For example, with a sampling frequency of 8 MHz, the measured range to a satellite can be off by up to 19 m. Thus, for each satellite, the solution space is sliced into spherical shells with a slice width of $\lambda_\mathbf{s}$. At all points in such a slice, receiver device **140** measures the same range to satellites **110**. With multiple satellites, the space is sliced in several directions. This divides the solution space in areas of equal observations, that is, areas in which all the points correspond to the same measured pseudo-range. In other words, since the arrival times for satellites **110** cannot be determined with arbitrary accuracy, some areas of the solution space relating to two different hypotheses may have equal likelihoods. For each such area, the OPE engine **150** may be configured to determine the likelihood only once to save computational power. Referring to **FIG. 7,** parallel lines may refer to possible spreading code arrival times for a respective transmitter. In an embodiment, OPE engine **150** may determine the likelihood only once for areas of equal observations and equal likelihood, e.g., based on the time of a sample modulo for a given sampling length $\lambda_\mathbf{s}$, in cases where the receiver clock (not shown) is exact. In embodiments where the receiver clock is not exact, the search space is discretized by OPE engine **150** in a three-dimensional grid, instead of determining the likelihood for each area of equivalent observation leading to equal likelihood.

Since the exact shape of the division of the search space (see for the example "triangles" designated by labels **610, 620** and **630** located between parallel lines) in the areas of equal observations, it may be desirable to sample the space with a grid with fixed distance ($\lambda$**s**) between neighbouring points and dense enough to "capture" all these areas.

The discouraging message is that the size of some of the areas that lead to the same likelihoods can be arbitrarily small (areas **610, 620** and **630b**). Hence, with a finite amount of hypotheses and without information about the signal phases, i.e., the exact time of a sample modulo $\lambda$**s**, it is impossible to be sure that a hypothesis is determined for each and every area, no matter how dense the grid. Therefore, with any fixed grid density, we might not investigate/compare against another area with equal likelihood some areas and therefore lose information i.e. the best obtainable likelihood may be missed. But since one cannot identify all areas because of the unknown exact time, adaptive sampling (not a fixed grid) is no possibility to resolve this issue.

Looking only at a single satellite, a dissection of space into slices is obtained (see bold lines in **FIG. 7**). If one of the axes of the grid is perpendicular to these slices, the distance between adjacent points in the grid must be at most $\lambda$**s** in order not to lose information. (If the distance was larger, not each slice would be sampled.) Now, if more satellites are added, the space gets cut further, so the areas get smaller and thus the grid spacing certainly cannot increase with more satellites. Therefore, the maximum spacing between points in the grid is $\lambda$**s**.

As outlined herein below, the use of a finer grid may not be necessary. Some precision may be traded to prevent losing information or accept a small decrease in the signal-to-noise ratio.

When neighbouring points in the grid are $\lambda$**s** apart, each point has to represent a cube of side length lambda in order to guarantee not to miss some areas. Now, such a cube has a diameter of sqrt(3)* $\lambda$**s**≈**1.7*** $\lambda$**s<2*** $\lambda$**s**. Since the space is divided in those cubes, an uncovered area can be at most half a diameter apart from a grid point; i.e., the distance to a grid point is less than $\lambda$**s**. A distance smaller than $\lambda$**s** can at most cross one slice boundary per satellite. This means that an uncovered area and its nearest point are at most one index or sample in the correlation apart for each satellite. (More precisely, the indices to which the uncovered area maps in the correlation differ by at most one from those that the nearest sample point maps to.) Thus, a simple solution to the problem of unsampled spaces is instead of using the correlation values at the indices to which a sample maps, use the maximum over its direct neighbours. Like this, no high likelihood value is missed. The trade-off involved here is that an area might get a too high likelihood because the neighbouring correlation values are higher. Therefore, the receiver cannot anymore be localized to one sample precision, but three. This means that with this method, the precision of the positioning decreases by a factor of three.

It is now outlined what happens if the space is sampled with a grid spacing of $\lambda$**s**. The key observation is that, for example, normal GPS receivers (and possibly also other wireless receiver devices) oversample the received CA codes forming a rectangular-like shaped function. The correlation of two rectangular-like pattern leads to correspondingly triangular-like shaped functions or pattern.

For the correlation, this means that the peaks of the CA codes may not be confined to a single (e.g., infinitesimal small) index. Rather their neighbouring values may be quite high as well and, therefore form the above-noted pyramid-like pattern. Without noise, the correlation values $k$ samples away from the peak have a value of at least $1-k*2-f_{PRN}/fs$ times the value of the peak. $f_{PRN}$ is the rate of the PRN sequences (1.023 MHz). $f_{PRN}/fs$ is the fraction of the locally or receiver device **140** generated PRN sequence which does not match the correct part of the PRN in the signal. Hence, that fraction is deduced twice from the value at the peak because if the now nonoverlapping sections align with a part of the PRN with switched sign, the correlation value is reduced by twice the before overlapping area. For a sampling rate of 8 MHz for instance, the directly neighbouring values of the peak are at least 74 % as high as the peak, for a sampling rate of 56 MHz at least 96 %. Thus, assuming the used sampling rate is at least 8 MHz, the sample would still fall on the same PRN even by allowing up to 26 % too small correlation values. Therefore there is may be no substantial loss in precision. The trade-off may be a decrease in the likelihood at the correct position, which can decrease at most according to the given formula with $k$=1. ($k$=1 since as explained herein above, the correct correlation values to use are at most one index apart from a sampled point.) So, this means that the signal-to-noise ratio decreases by this much, for instance by at most 26 % for 8 MHz sampling frequency, which is about -1.3 dB. Therefore, with a high enough sampling rate, the error may not be unacceptably large by just using the value at the sampled points.

In an embodiment, the search space may be limited or bounded by using external data such as, for example, external data that is descriptive of an antenna position of a cellular network as a reference. In an embodiment, when the signal strength of the satellites is good enough, the approximate receiver location. Taking into account that a measured Doppler shift of a signal can limit the receiver position to a cone so that the receiver positions is then at the intersection of the cones from each satellite. Of course, when no initial fix is determined, one of the previously determined positions may be used as an approximation for determining the new estimate.

The distance between two adjacent hypotheses should not be greater than the distance corresponding to the time between two signal samples. If exactly this distance between adjacent hypotheses is chosen then, at most, a sample /value in the correlation vector that is adjacent to the correct one in the correlation vector may be selected. It is noted that the correct sample is the one that corresponds to the correct position of the receiver. Because, as already outlined herein above, the correlation has the property of resulting in a "triangular-like shaped pattern" (around the correct position, when looking at the function values vs time, it is not such a problem to pick a sample adjacent to the correct one. The error depends on the used sampling rate. For 8 MHz sampling rate, the error is 26%.

This discussion applies for each satellite, but note that we only get this error if we actually pick the "wrong" sample, which likely does not happen for all channels (of the respective transmitters) at the same time. Clearly, the maximum total error also depends on the method used to combine the channels.

EXAMPLES

Example 1

The navigation data was decoded in a separate run of the conventional algorithm on the same data and store it for later processing with the disclosed method. Running the classical GPS approach also helps obtaining accurate timestamps for the recorded samples. The sensitivity in accurate local timestamps was evaluated by using the accurate time annotation. However, this was done merely to simplify the evaluation. The hardware prototype used did not rely on the classical GPS approach to synchronize the local clock. Downloading the navigation data from a server made decoding the GPS signal superfluous.

The approximate receiver position was computed as a random variation of the position computed by the conventional algorithm on the same data. The approximate time was obtained in the same manner in order to simulate hardware that synchronizes time over an external channel such as a cellular network.

For the evaluation of the method, a software defined radio (SDR) receiver (Ettus USRP B200) with a standard GPS patch antenna from Trimble Navigation was used to obtain the samples.

The SDR receiver was used to make recordings of several minutes. Windows with one millisecond length were cut out. To simulate a real-life A-GPS scenario, the timestamp of a window as the time of the first sample in the whole recording was computed, plus the time offset corresponding to the number of samples that elapsed since the beginning of the recording. The timestamp of the first sample in the recording was computed with a conventional least-squares GPS algorithm since no hardware was available that could be used to synchronize with an external time source such as a cellular network or a radio time signal.

The LO offset was tracked by determining the C/A code correlation functions for different frequency offsets. When the first data is based on non-GNSS data and/or based on a previous position fix, the LO offset only was estimated instead of the sum of the LO offset and the Doppler shifts of each satellite. In accordance with FIG. 8, the largest part of the receiver's LO error was considered to be constant.

To evaluate the accuracy of the method disclosed herein, the "ground truth" of the position was computed for arrival times and LO offsets. The ground truth was computed as the mean position of the conventional GPS localization algorithm over all positions computed from the whole recording of several minutes to obtain a ground truth for arrival times and LO offsets. The error in the observed frequencies was evaluated by comparing the frequencies that were found in the tracking stage of the conventional algorithm with the frequencies expected from the reference position and ephemerides.

The navigation data was decoded in a separate run using the conventional algorithm on the same data and stored for later processing with the novel method. Running the classical GPS approach helped obtaining accurate timestamps for the recorded samples. These accurate timestamps were used to evaluate the sensitivity of the novel method to inaccurate local timestamps. However, this was merely done to simplify the evaluation.

The hardware prototype (herein: hardware receiver) described later did not rely on the classical GPS approach to synchronize the local clock. Downloading the navigation data from a server made decoding the GPS signal superfluous.

The results of the novel method compared to the ground truth are shown in a three and a two dimensional version. For the latter, the altitude of the SDR receiver was obtained from the ground truth".

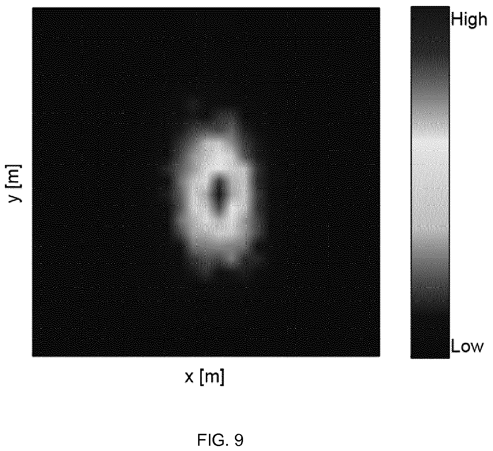

Reference is made to **FIG. 9,** which shows a plot of a likelihood function distribution that were computed for hypotheses in two dimensions, that is, for two device parameters. The shown likelihood distributions in two spatial dimensions was computed from one millisecond window of samples obtained at the SDR receiver from GPS satellites. The samples were captured at an 8 MHz sampling rate under good signal conditions. It was observed that the distribution looks approximately convex. The distance between two points in the grid is approximately 37 meters. **FIG. 9** is representative for most of the windows of the recording in the sense that most computed distributions look similarly good as shown in **FIG. 9.** Also, likelihood distributions in three dimensions look equally reasonable. It was concluded from this experiment that this approach seems viable in practice.

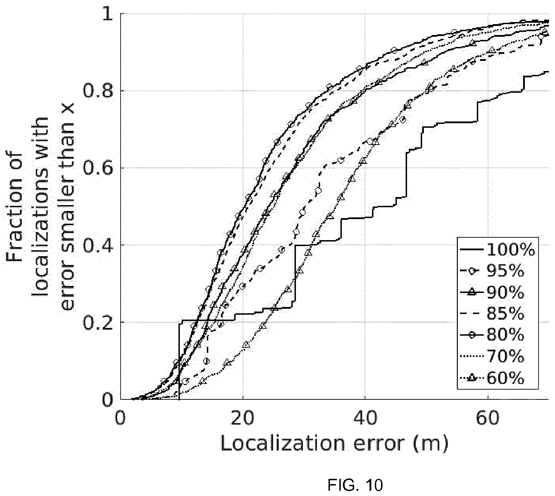

The method was first evaluated under good signal conditions. Therefore, and since measurements are inherently noisy, it might be more robust and accurate to compute the weighted average over all points whose likelihood is above some threshold, with the weight of a point for this average being its likelihood. The threshold is given as a fraction of the maximum likelihood. The results are shown in **FIG. 10.** In other words, **FIG. 10** shows graphs illustrating the dependency between a likelihood threshold and a distance error, which is the distance from the true device location to the obtained location using an embodiment of the method described herein. The best accuracies were obtained at a threshold of approximately 80 percent of the maximum probability. However, for the remaining evaluation of the method, only the point(s) with the maximum likelihood were taken into consideration. The indicated fraction relates to the maximum likelihood obtained for any evaluated hypothesis and is the likelihood threshold for selecting points for the weighted averaging. The graphs shown in **FIG. 11** were obtained using an Ettus B200 software defined radio and a standard GPS patch antenna, as well as the navigation data broadcast by the satellites (which were downloaded from a web server).

Example 2

In this example, the method was evaluated under comparatively bad signal conditions by conducting the measurements in different locations:

[1] Between some houses, where multipath signals might be received

[2] Under a roof so that only multipath signals were received

[3] Inside a garage so that the EM signal propagated through bricks or brick walls

The results for the various "bad signal condition" scenarios are shown in **FIG. 11** Surprisingly, the median error is not much different from the baseline in all experiments, including indoors. However, the upper percentiles are much worse indoors than for the other measurements and also significantly degraded under the roof. It is noted that with the data recorded indoors no position could be computed with the conventional algorithm, because the EM signal could not be acquired.

Example 3

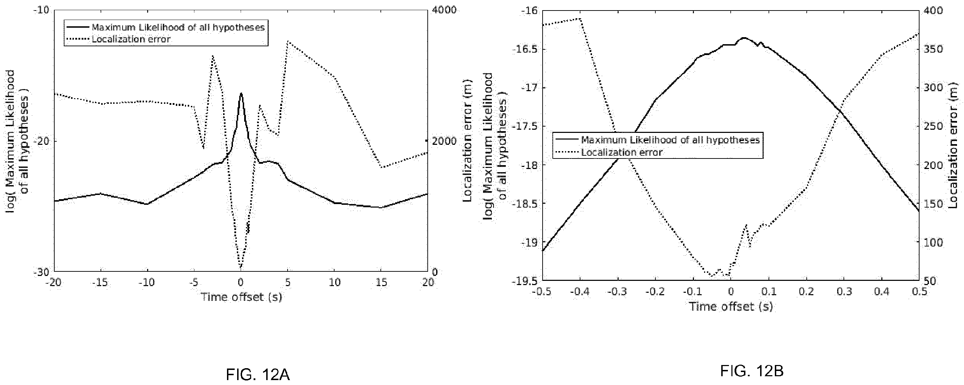

An experiment was conducted to test the influence of the time parameter on our likelihood function. For this, a random one millisecond long window of the sampled signal was selected and the position was searched which maximizes the likelihood given different receiver times. The results of this experiment are shown in **FIGs. 12A** and **12B.** The plot in **FIG. 12A** suggests that at least for signals with good quality, it looks like that the likelihood function is convex in the time dimension. However, the correct time cannot be constructed very precisely because the probability of the best point does not change significantly when the time is within a second of the correct time solid curve in the plot shown in **FIG. 12B**). Since the positioning quality does however vary inside this time range (dotted curve in the right hand side plot), it is useful to synchronize the time through an external channel such as a cellular network to get a more accurate position.

By looking at the bottom plot in **FIG. 12A,** it was observed that the correct time is approximately in the middle of the likelihood plateau. This suggests that the correct time can be found with an accuracy of a few hundred milliseconds by searching over the time dimension and picking the center of the detected plateau. More specifically, the weighted averaging of all the points with high likelihood over all dimensions of the search space was performed, i.e. also over the time. This means that hypotheses are included with some time offset value ranging in the order of what can be seen in the figure. Since there should be approximately the same number of points with positive and negative time offset (as suggested by the approximate symmetry in the figure), the weighted average can provide a time value close to the correct value.

These plots shows that the accurate time at the receiver may not be needed, but that it can be determined based on the likelihoods associated with the hypotheses. The hypothesis for which all other parameters (e.g. position) are correct has the highest probability around the correct time. The further away from the correct time, the lower the probability. The error is just in the same plot to give an idea how accurate the time at the receiver may be determined, because the likelihood flattens out close to the correct time **(FIG. 12B).**

Example 4

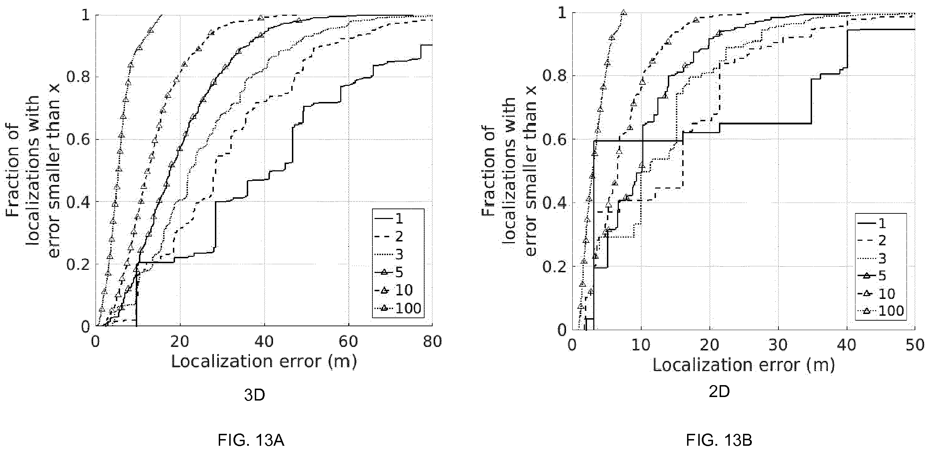

In this example, the influence of averaging multiple positions computed from different one millisecond windows (i.e., sliding window average) was tested to better understand the trade-off between accuracy and the amount of data used. The experiment was performed under good signal conditions. The results thereof shown in **FIGs 13A** and **12A.** With only a few more milliseconds than just one, significant accuracy was gained, and with a tenth of a second of the sampled signal, all positions are within 16.5 or 10.7 meters in the 3D **(FIG. 13A)** and 2D case **(FIG. 13B),** respectively. The standard deviation when averaging over 100 windows is 3.3 meters.

In the **FIGs. 13A** and **13B,** the accuracy is only indicated with respect to spatial error. Once for 3D positioning and once for 2D positioning, where the receiver height/altitude is assumed to be known.

Example 5

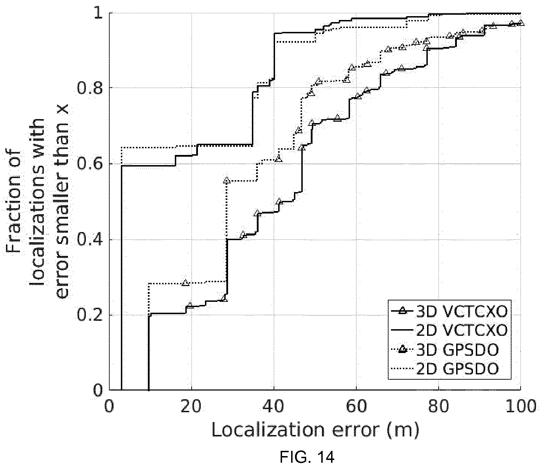

To evaluate the influence of an inaccurate clock such as the crystal oscillator in the Ettus B200 software radio, an experiment was conducted using a more accurate GPS driven oscillator. The specified maximum frequency error of the oscillator in the B200 is 2 parts per million (ppm). For this experiment, a FireFly 1-A GPS disciplined oscillator from Jackson Labs was used which employs an oven-controlled crystal oscillator (OCXO) with 25 parts per billion (ppb) frequency stability. The results of this experiment are shown in the plot of **FIG. 14.** Because the GPS clock is much more accurate, the estimated Doppler shifts better match the sampled signal. Hence the signal to noise ratio in the correlation function improves. However, the resulting performance improvement is comparatively small.

In the experiments it was assumed that the local oscillator frequency error can be sufficiently corrected sufficiently compute a position fix. D. Akos states in "A Software Radio Approach to Global Navigation Satellite System Receiver Design", PhD thesis, Ohio University, Athens, OH, that the frequency for the locally generated C/A code should match the actual frequency with an accuracy better than 250 Hz. Otherwise, correlation peaks are hard to find even under good signal conditions. Accordingly, to obtain a SNR close to the optimum possible, the accuracy of the frequency should be better than 250 Hz. Therefore, the frequency error was investigated by looking at the difference of the observed frequencies in the tracking phase of the conventional algorithm and the expected frequencies. The expected frequencies were calculated based on the positioning solution of the conventional algorithm and the ephemerides. The plot in **FIG. 7** shows the result for each satellite independently over the course of 12.6 minutes. The measurements were made every 10 milliseconds. The plot shows that the frequency drifts similarly for each satellite, which confirms that the drift is due to the local oscillator error. Over the course of 12 minutes, the change was less than 0.03 ppm. For the local generation of the L1 frequency for the down-conversion to baseband, 0.03 ppm corresponded to an absolute drift of 47 Hz. Maybe the observed frequency drift was due to the receiver heating up due to the long sampling. In practice, sampling for one or a few milliseconds is required, so this error source could be excluded. Not only was the change over several minutes not very large, but during all of our measurements over the course of a year, so with quite different ambient temperatures, the greatest difference in the observed frequency offsets was 0.13 ppm. So it looks like the greatest part of the frequency error was caused by manufacturing differences that could be calibrated in advance. The remaining error of at most $0.13ppm/2=0.065ppm$ corresponds to an absolute frequency error of 102 Hz, which should result in an acceptable SNR. Similar to the classic localization approach, the disclosed method could be adapted to observe the Doppler shifts of the satellites which in turn could be used to estimate the LO offset.

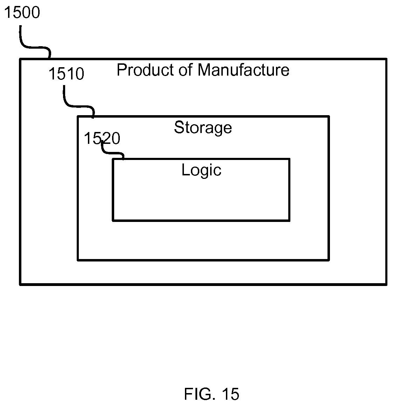

Reference is made to **FIG. 15** which schematically illustrates a product of manufacture **1500,** according to some embodiments. Product **1500** may include a non-transitory tangible machine-readable storage medium **1510** to store logic **1520,** which may be used, for example, to perform at least some of the functionality of OPE engine **150.**

Additional examples:

In a first example, a method for determining an estimate of a value relating to a parameter of a wireless receiver device, comprises the following steps: (1) obtaining first data relating to the wireless receiver device and/or the state of the positioning system; (2) establishing, based on the first data, a plurality of hypotheses regarding at least one device parameter value of the wireless receiver device; (3) obtaining second data descriptive of at least two EM signals actually received by the wireless receiver device from a set of at least two transmitters, respectively; (4) determining at least two levels of correspondence between I) at least two of the plurality of hypotheses and II) one or more signal parameter values relating to the at least two actually received EM signals, respectively; and (5) determining, based on the at least two determined levels of correspondence, an estimate relating to a parameter of the wireless receiver device.

Example 2 includes the subject matter of example 1 and, optionally, selecting, based on the at least two levels of correspondence, one or more candidate estimates, wherein the estimate relating to a parameter of the wireless receiver device is determined based on the one or more candidate estimates.

Example 3 includes the subject matter of example 2 and, optionally, wherein selecting the one or more candidate estimates comprises selecting one or more corresponding hypotheses.

Example 4 includes the subject matter of any of examples 1 to 3 and, optionally, wherein the plurality of hypotheses concern a candidate position-time tuple.

Example 5 includes the subject matter of any of examples 1 to 4 and, optionally, wherein the plurality of hypotheses relate to a plurality of candidate sets of at least two EM signals which are assumed to be receivable by the wireless receiver device from a plurality of candidate sets of at least two transmitters, respectively, at corresponding candidate position-time tuples.

Example 6 includes the subject matter of any of examples 1 to 5 and, optionally, wherein the one or more signal parameter values are descriptive of the at least two actually received EM signals, during a time period, in terms of time vs amplitude or frequency vs amplitude.

Example 7 includes the subject matter of any of examples 1 to 6 and, optionally, wherein the determining of a level of correspondence comprises: determining, for each one of the at least two of the plurality of hypotheses, a set of at least two hypothesis validators in accordance with a set of at least two candidate EM signals assumed to be receivable by the wireless receiver device; applying the set of at least two hypothesis validators on the set of at least two actually received EM signals to obtain at least two validation outputs for validating a hypothesis associated with the set at least two hypothesis validators; and determining, for the hypothesis, a level of correspondence between I) the set of at least two validation outputs and II) the set at least two candidate EM signal, respectively.

Example 8 includes the subject matter of example 7 and, optionally, wherein the step of applying the set of at least two hypothesis validators comprises: shifting the at least two actually received EM signals of a set in accordance with the corresponding least two hypothesis validators of a set to obtain a set of at least two actually received and shifted signals as validation outputs.

Example 9 includes the subject matter of example 8 and, optionally, wherein the level of correspondence relates to a level of alignment between the at least two actually received and shifted signals of a set.

Example 10 includes the subject matter of any of examples 7 to 9 and, optionally, wherein a hypothesis validator is indicative of a value relating to parameters selected from a group comprising: a distance between one or more expected set of at least two transmitters and an expected position of the wireless receiver device, at associated signal recordation timestamps; an estimated transmitter clock offset at a signal transmit time; atmospheric effects on a signal transmission delay; and any combination of the aforesaid.

Example 11 includes the subject matter of any of examples 7 to 10 and, optionally, wherein a hypothesis validator is indicative of values of one or more parameters relates to: an expected EM signal arrival time which depends on parameters of the receiver device; a transmitter and/or an environmental parameters.

Example 12 includes the subject matter of any of the examples 1 to 11 and, optionally, wherein a level of correspondence refers to a likelihood of a hypothesis.

Example 13 includes the subject matter of any of the examples 1 to 12 and, optionally, wherein the step of determining a level of correspondence comprises determining at least two likelihoods respective of the at least two of the plurality of hypotheses regarding at least one device parameter value of the wireless receiver device.

Example 14 includes the subject matter of example 13 and, optionally, selecting, from the at least two of the plurality of hypotheses, the hypothesis having maximum likelihood.

Example 15 includes the subject matter of example 14 and, optionally, selecting, from the at least two of the plurality of hypotheses, one or more position hypotheses which have a likelihood that is above a likelihood threshold; and determining a weighted average for the selection of the one or more hypotheses, wherein a weight associated with a selected hypothesis corresponds to the likelihood of the selected hypothesis.

Example 16 includes the subject matter of example 15 and, optionally, wherein the likelihood threshold relates to a parameter selected from a group comprising: level of correspondence; the maximum likelihood; received signal strength of some or all of actually received EM signals; receiver device parameters; transmitter parameters; a predetermined value; information obtained relating to an environmental parameter; and/or any combination of the aforesaid.

Example 17 includes the subject matter according to any of the examples 1 to 16 and, optionally, wherein the at least two transmitters from which signals are actually received are orbiting satellites.

Example 18 includes the subject matter according to any of the examples 1 to 17 and, optionally, wherein the first data is partly received from a source which is external to the at least two transmitters; or received from a source which is only external to the at least two transmitters.

Example 19 includes the subject matter according to any of the examples 1 to 18 and, optionally, performing time synchronization, directly and/or indirectly, between the wireless receiver device and the at least two transmitters.

Example 20 includes the subject matter according to any of the examples 1 to 19 and, optionally, wherein a position time-tuple can be determined in a signal recording time period of an EM signal which is shorter than a time period required to obtain a timestamp from the EM signal actually received.

Example 21 includes the subject matter according to any of the examples 1 to 20 and, optionally, wherein the estimate relates to a parameter of the wireless receiver device which is selected from a group comprising: a position; a velocity; an acceleration; an orientation; local time offset; local oscillator error; and/or any combination of the aforesaid.

Example 22 includes the subject matter according to any of the examples 2 to 21 and, optionally, wherein an optimization method is employed for selecting, based on the determined likelihoods, one or more candidate estimates which are distributed in a search space.

Example 23 includes the subject matter according to example 22 and, optionally, wherein the optimization method comprises the application of branch-and-bound.

Unless otherwise stated, the use of the expression "and/or" between the last two members of a list of options for selection indicates that a selection of one or more of the listed options is appropriate and may be made.

In the claims or specification of the present application, unless otherwise stated, adjectives such as "substantially" and "about" modifying a condition or relationship characteristic of a feature or features of an embodiment of the invention, are understood to mean that the condition or characteristic is defined within tolerances that are acceptable for operation of the embodiment for an application for which it is intended.

It should be understood that where the claims or specification refer to "a" or "an" element and/or feature, such reference is not to be construed as there being only one of that element and/or feature.

Terms used in the singular shall also include the plural, except where expressly otherwise stated or where the context otherwise requires.

In the description and claims of the present application, each of the verbs, "comprise" "include" and "have", and conjugates thereof, are used to indicate that the object or objects of the verb are not necessarily a complete listing of components, elements or parts of the subject or subjects of the verb.

According to an embodiment, the platform and associated receivers may detect communication signals emitted from computerized end-user devices which may, for example, include a multifunction mobile communication device also known as "smartphone", a personal computer, a laptop computer, a tablet computer, a personal digital assistant, a wearable device, a handheld computer, a notebook computer, a vehicular device and/or a stationary device

It is noted that the term "detection" as well as grammatical variations thereof may encompass any processes that enable such "detection", including sensing and/or monitoring.

The various features and steps discussed above, as well as other known equivalents for each such feature or step, can be mixed and matched by one of ordinary skill in the art to perform methods in accordance with principles described herein. Although the disclosure has been provided in the context of certain embodiments and examples, it will be understood by those skilled in the art that the disclosure extends beyond the specifically described embodiments to other alternative embodiments and/or uses and obvious modifications and equivalents thereof. Accordingly, the disclosure is not intended to be limited by the specific disclosures of embodiments herein. For example, any digital computer system can be configured or otherwise programmed to implement a method disclosed herein, and to the extent that a particular digital computer system is configured to implement such a method, it is within the scope and spirit of the disclosure. Once a digital computer system is programmed to perform particular functions pursuant to computer-executable instructions from program software that implements a method disclosed herein, it in effect becomes a special purpose computer particular to an embodiment of the method disclosed herein. The techniques necessary to achieve this are well known to those skilled in the art and thus are not further described herein. The methods and/or processes disclosed herein may be implemented as a computer program product such as, for example, a computer program tangibly embodied in an information carrier, for example, in a non-transitory computer-readable and/or non-transitory machine-readable storage device and/or in a propagated signal, for execution by or to control the operation of a data processing apparatus including, for example, one or more programmable processors and/or one or more computers. The terms "non-transitory computer-readable storage device" and "non-transitory machine-readable storage device" encompasses distribution media, intermediate storage media, execution memory of a computer, and any other medium or device capable of storing for later reading by a computer program implementing embodiments of a method disclosed herein. A computer program product can be deployed to be executed on one computer or on multiple computers at one site or distributed across multiple sites and interconnected by one or more communication networks.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The term "engine" may comprise one or more computer modules, wherein a module may be a self-contained hardware and/or software component that interfaces with a larger system. A module may comprise a machine or machines executable instructions. A module may be embodied by a circuit and/or a controller programmed to cause the system to implement the method, process and/or operation as disclosed herein. For example, a module may be implemented as a hardware circuit comprising, e.g., custom VLSI circuits or gate arrays, off-the-shelf semiconductors such as logic chips, transistors, or other discrete components. A module may additionally or alternatively be implemented in programmable hardware devices such as field programmable gate arrays, programmable array logic, programmable logic devices or the like. Correspondingly, OPE engine 150 may be realized by one or more hardware, software and/or hybrid hardware/software modules, e.g., as outlined herein.

In the description, unless otherwise stated, adjectives such as "substantially" and "about" that modify a condition or relationship characteristic of a feature or features of an embodiment of the invention, are to be understood to mean that the condition or characteristic is defined within tolerances that are acceptable for operation of the embodiment for an application for which it is intended.

The term "operably coupled" may encompass the meanings of the terms "responsively coupled", "communicably coupled", and the like.

Unless otherwise indicated, the word "or" in the description and claims is considered to be the inclusive "or" rather than the exclusive "or", and indicates at least one of, or any combination of items it conjoins.

It is appreciated that certain features of the invention, which are, for clarity, described in the context of separate embodiments or examples, may also be provided in combination in a single embodiment. Conversely, various features of the invention, which are, for brevity, described in the context of a single embodiment, may also be provided separately or in any suitable sub-combination or, as suitable, in any other described embodiment of the invention. Certain features described in the context of various embodiments are not to be considered essential features of those embodiments, unless the embodiment is inoperative without those elements.

It is important to note that methods discussed herein are not limited to those diagrams or to the corresponding descriptions. For example, the methods may include additional or even fewer processes or operations in comparison to what is described in the figures. In addition, embodiments of the method are not necessarily limited to the chronological order as illustrated and described herein.

Discussions herein utilizing terms such as, for example, "processing", "computing", "calculating", "determining", "establishing", "analyzing", "checking", "estimating", "deriving", "selecting", "inferring" or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

It is noted that the term "exemplary" is used herein to refer to examples of embodiments and/or implementations, and is not meant to necessarily convey a more-desirable use-case.

While the invention has been described with respect to a limited number of embodiments, these should not be construed as limitations on the scope of the invention, but rather as exemplifications of some of the embodiments.

**Claims**

1. A method for determining an estimate of a value relating to a parameter of a wireless receiver device, comprising the following steps:

    (1) obtaining first data relating to the wireless receiver device and/or the state of the positioning system;
    (2) establishing, based on the first data, a plurality of hypotheses regarding at least one device parameter value of the wireless receiver device;
    (3) obtaining second data descriptive of at least two EM signals actually received by the wireless receiver device from a set of at least two transmitters, respectively;
    (4) determining at least two levels of correspondence between I) at least two of the plurality of hypotheses and II) one or more signal parameter values relating to the at least two actually received EM signals, respectively; and
    (5) determining, based on the at least two determined levels of correspondence, an estimate relating to a parameter of the wireless receiver device.

2. The method of claim 1, further comprising:

    selecting, based on the at least two levels of correspondence, one or more candidate estimates,
    wherein the estimate relating to a parameter of the wireless receiver device is determined based on the one or more candidate estimates.

3. The method of claim 2, wherein selecting the one or more candidate estimates comprises selecting one or more corresponding hypotheses.

4. The method of any of the preceding claims, wherein the plurality of hypotheses concern a candidate position-time tuple.

5. The method of any of the preceding claims, wherein the plurality of hypotheses relate to a plurality of candidate sets of at least two EM signals which are assumed to be receivable by the wireless receiver device from a plurality of candidate sets of at least two transmitters, respectively, at corresponding candidate position-time tuples.

6. The method of any of the preceding claims, wherein the one or more signal parameter values are descriptive of the at least two actually received EM signals, during a time period, in terms of time vs amplitude or frequency vs amplitude.

7. The method of any of the preceding claims, wherein the determining of a level of correspondence comprises:

    (1) determining, for each one of the at least two of the plurality of hypotheses, a set of at least two hypothesis validators in accordance with a set of at least two candidate EM signals assumed to be receivable by the wireless receiver device;
    (2) applying the set of at least two hypothesis validators on the set of at least two actually received EM signals to obtain at least two validation outputs for validating a hypothesis associated with the set at least two hypothesis validators; and
    (3) determining, for the hypothesis, a level of correspondence between I) the set of at least two validation outputs and II) the set at least two candidate EM signal, respectively.

8. The method of claim 7, wherein the step of applying the set of at least two hypothesis validators comprises:

    shifting the at least two actually received EM signals of a set in accordance with the corresponding least two hypothesis validators of a set to obtain a set of at least two actually received and shifted signals as validation outputs.

9. The method of claim 8, wherein the level of correspondence relates to a level of alignment between the at least two actually received and shifted signals of a set.

10. The method of any of claims 7 to 9, wherein a hypothesis validator is indicative of a value relating to parameters selected from a group comprising:

    a distance between one or more expected set of at least two transmitters and an expected position of the wireless receiver device, at associated signal recordation timestamps;
an estimated transmitter clock offset at a signal transmit time;
atmospheric effects on a signal transmission delay; and
any combination of the aforesaid.

11. The method of any of the claims 7 to 10, wherein a hypothesis validator is indicative of values of one or more parameters relating to:

an expected EM signal arrival time which depends on parameters of the receiver device,
a transmitter and/or an environmental parameters.

12. The method of any of the preceding claims, wherein a level of correspondence refers to a likelihood of a hypothesis.

13. The method of any of the preceding claims, wherein the step of determining a level of correspondence comprises determining at least two likelihoods respective of the at least two of the plurality of hypotheses regarding at least one device parameter value of the wireless receiver device.

14. The method of claim 13, further comprising:

selecting, from the at least two of the plurality of hypotheses, the hypothesis having maximum likelihood.

15. The method of claim 14, further comprising:

selecting, from the at least two of the plurality of hypotheses, one or more position hypotheses which have a likelihood that is above a likelihood threshold; and
determining a weighted average for the selection of the one or more hypotheses, wherein a weight associated with a selected hypothesis corresponds to the likelihood of the selected hypothesis.

16. The method of claim 15, wherein the likelihood threshold relates to a parameter selected from a group comprising:

level of correspondence;
the maximum likelihood;
received signal strength of some or all of actually received EM signals;
receiver device parameters;
transmitter parameters;
a predetermined value;
information obtained relating to an environmental parameter; and/or
any combination of the aforesaid.

17. The method according to any of the preceding claims, wherein the at least two transmitters from which signals are actually received are orbiting satellites.

18. The method according to any of the preceding claims, wherein the first data is partly received from a source which is external to the at least two transmitters; or received from a source which is only external to the at least two transmitters.

19. The method according to any of the preceding claims, further comprising;

performing time synchronization, directly and/or indirectly, between the wireless receiver device and the at least two transmitters.

20. The method according to any of the preceding claims, wherein a position time-tuple can be determined in a signal recording time period of an EM signal which is shorter than a time period required to obtain a timestamp from the EM signal actually received.

21. The method of any of the preceding claims, wherein the estimate relates to a parameter of the wireless receiver device which is selected from a group comprising:

a position;
a velocity;
an acceleration;
an orientation;
local time offset;
local oscillator error; and/or
any combination of the aforesaid.

22. The method according to any of the claims 2 to 21, wherein an optimization method is employed for selecting, based on the determined likelihoods, one or more candidate estimates which are distributed in a search space.

23. The method according to claim 22, wherein the optimization method comprises branch-and-bound.

FIG. 1

FIG. 2

110(A-D)

**SATELLITE** 114

112 Satellite Processor

113 Satellite Memory

114 Satellite OPE Engine

116 Satellite Communication Module

118 Satellite Power Module

120 **BASE STATION (BS)**

122 BS Processor

123 BS Memory

124 BS OPE Engine

126 BS Communication Module

127 BS user interface

128 BS Power Module

Network 190

130 100

**NAVIGATION INFORMATION SERVER**

131 Server Database

132 Server Processor

133 Server Memory

134 Server OPE Engine

136 Server Communication Module

137 Server User Interface

138 Server Power Module

140 **WIRELESS RECEIVER DEVICE**

141i Inertial device Sensors

141ii Non-Inertial device Sensors

142 Device Processor

143 Device memory

144 Device OPE Engine

145 Positioning Module

146 Device Communication Module

147 Device User Interface

148 Device Power Module

EP 3 296 767 A1

28

FIG. 3A

FIG. 3B

FIG. 3C

FIG. 3D

FIG. 3E

FIG. 3F

FIG. 3G

FIG. 3H

302A

302B

302C

302D

300A

300B

300C

300D

300E

300F

300G

300H

304

EP 3 296 767 A1

410 — OBTAINING FIRST DATA RELATING TO A WIRELESS RECEIVER DEVICE AND/OR THE STATE OF THE POSITIONING SYSTEM

420 — ESTABLISHING, BASED ON THE FIRST DATA, A PLURALITY OF HYPOTHESES REGARDING AT LEAST ONE DEVICE PARAMETER VALUE OF THE WIRELESS RECEIVER DEVICE

430 — OBTAINING SECOND DATA DESCRIPTIVE OF AT LEAST TWO RADIO SIGNALS ACTUALLY RECEIVED BY THE WIRELESS RECEIVER DEVICE FROM A SET OF AT LEAST TWO TRANSMITTERS

440 — DETERMINING AT LEAST TWO LEVELS OF CORRESPONDENCE BETWEEN RESPECTIVE AT LEAST TWO OF THE PLURALITY OF HYPOTHESES AND ONE OR MORE SIGNAL PARAMETER VALUES RELATING TO THE ACTUALLY RECEIVED AT LEAST TWO RADIO SIGNALS

450 — DETERMINING, BASED ON THE DETERMINED LEVEL OF CORRESPONDENCE BETWEEN THE AT LEAST TWO OF THE PLURALITY OF HYPOTHESES AND ONE OR MORE SIGNAL VALUES, AN ESTIMATE RELATING TO A PARAMETER OF THE WIRELESS RECEIVER DEVICE

FIG. 4

EP 3 296 767 A1

510 —⁓ RECEIVE GNSS RADIO SIGNALS

512 —⁓ MODIFY DATA DESCRIPTIVE OF RECEIVED GNSS SIGNALS

514 —⁓ CORRELATING DATA DESCRIPTIVE OF RECEIVED GNSS SIGNALS WITH A KNOWN SPREADING SEQUENCE TO OBTAIN CORRELATION VALUES

520 —⁓ RECEIVE DATA FROM AN EXTERNAL SOURCE

516 —⁓ MODIFY CORRELATION VALUES

522 —⁓ ESTABLISH, BASED ON THE RECEIVED DATA, A PLURALITY OF HYPOTHESES

530 —⁓ EVALUATE THE ONE OR MORE HYPOTHESES

532 —⁓ CONTINUE EVALUATING THE PLURALITY OF HYPOTHESES?

534 —⁓ DETERMINE ESTIMATE BASED ON EVALUATED PLURALITY OF HYPOTHESES

FIG. 5

FIG. 6

FIG. 7

FIG. 8

EP 3 296 767 A1

FIG. 9

FIG. 10

FIG. 11

FIG. 12A

FIG. 12B

FIG. 13A

FIG. 13B

FIG. 14

Localization error (m)

Fraction of localizations with error smaller than x

- 3D VCTCXO
- 2D VCTCXO
- 3D GPSDO
- 2D GPSDO

Product of Manufacture

1500

1510

Storage

1520

Logic

FIG. 15

Europäisches
Patentamt

European
Patent Office

Office européen
des brevets

# EUROPEAN SEARCH REPORT

**Application Number**

EP 16 18 8946

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/070987 A1 (JARVIS MURRAY ROBERT [GB] ET AL) 13 March 2014 (2014-03-13) <br> * paragraph [0011] - paragraph [0012] * <br> * paragraph [0015] - paragraph [0016] * <br> * paragraph [0021] * <br> * paragraph [0040] - paragraph [0050] * <br> * paragraph [0058] - paragraph [0059] * <br> * paragraph [0068] - paragraph [0078] * <br> ----- | 1-23 | INV. <br> G01S19/42 <br> G01S19/24 |
| X | DIESPOSTI ET AL: "GPS PRN Code Signal Processing and Receiver Design for Simultaneous All-in-View Coherent Signal Acquisition and Navigation Solution Determination", <br> NTM 2007 - PROCEEDINGS OF THE 2007 NATIONAL TECHNICAL MEETING OF THE INSTITUTE OF NAVIGATION, THE INSTITUTE OF NAVIGATION, 8551 RIXLEW LANE SUITE 360 MANASSAS, VA 20109, USA, <br> 24 January 2007 (2007-01-24), pages 91-103, XP056005049, <br> * page 91, section "Abstract" * <br> * pages 95-98, from the beginning of section "High Level Description ..." to the end of section "Modified Carrier Phase Angle Processing ..." * <br> ----- | 1-21 | |
| X | US 2009/171583 A1 (DIESPOSTI RAYMOND S [US]) 2 July 2009 (2009-07-02) <br> * the whole document * <br> ----- | 1-21 | |

**TECHNICAL FIELDS SEARCHED (IPC)**

G01S

The present search report has been drawn up for all claims

| Place of search | Date of completion of the search | Examiner |
|---|---|---|
| Munich | 3 March 2017 | Hekmat, Taymoor |

EPO FORM 1503 03.82 (P04C01)

## ANNEX TO THE EUROPEAN SEARCH REPORT
## ON EUROPEAN PATENT APPLICATION NO.

EP 16 18 8946

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2017

| Patent document cited in search report | | | Publication date | Patent family member(s) | | | Publication date |
|---|---|---|---|---|---|---|---|
| US 2014070987 | A1 | | 13-03-2014 | DE | 102013005058 | A1 | 13-03-2014 |
| | | | | GB | 2509343 | A | 02-07-2014 |
| | | | | US | 2014070987 | A1 | 13-03-2014 |
| | | | | US | 2016231428 | A1 | 11-08-2016 |
| US 2009171583 | A1 | | 02-07-2009 | AT | 463750 | T | 15-04-2010 |
| | | | | EP | 2049915 | A2 | 22-04-2009 |
| | | | | JP | 5780701 | B2 | 16-09-2015 |
| | | | | JP | 5957025 | B2 | 27-07-2016 |
| | | | | JP | 2010500562 | A | 07-01-2010 |
| | | | | JP | 2014178321 | A | 25-09-2014 |
| | | | | US | 2009171583 | A1 | 02-07-2009 |
| | | | | WO | 2008021121 | A2 | 21-02-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A Software Radio Approach to Global Navigation Satellite System Receiver Design. **D. AKOS.** PhD thesis. Ohio University